# EUROPEAN PATENT APPLICATION

(11) **EP 4 373 075 A1**
(43) Date of publication of application: **22.05.2024**
(21) Application number: 22875091.5
(22) Date of filing: 29.09.2022
(51) Int. Cl.: H04N 7/15, H04L 65/403

(54) **METHOD AND APPARATUS FOR SWITCHING CONFERENCE MODE, AND MEDIUM**

(30) Priority: 30.09.2021 CN 202111160039
(71) Applicant: Huawei Technologies Co., Ltd., Shenzhen, Guangdong 518129 (CN)
(72) Inventor: WU, Gang, Shenzhen, Guangdong 518129 (CN); HUANG, Shunyan, Shenzhen, Guangdong 518129 (CN); LV, Liang, Shenzhen, Guangdong 518129 (CN)
(74) Representative: Maiwald GmbH
(86) International application number: PCT/CN2022/122667
(87) International publication number: WO 2023/051710

(57) **Abstract**

This application discloses a method for switching a conference mode, an apparatus, and a medium, to resolve long time consumed for switching a conference server. In embodiments of this application, a media exchange server is configured in a video conference system, and a media connection is established between a conference terminal and the conference server via the media exchange server. The media connection includes an external media connection between the conference terminal and the media exchange server and an internal media connection between the media exchange server and the conference server. When a conference mode needs to be switched, it is only necessary to switch an association between the external media connection with the media exchange server and the internal media connection with the conference server before mode switching to an association between the external media connection with the media exchange server and an internal media connection with a conference server after the mode switching. The external media connection between the conference terminal and the media exchange server does not need to be disconnected. In addition, the conference server and the media exchange server are in the same video conference system, and internal switching time of switching the server is far less than external switching time. Therefore, the switching time is very short.

## Description

### CROSS-REFERENCE TO RELATED APPLICATIONS

This application claims priority to Chinese Patent Application No. 202111160039.6, filed with the China National Intellectual Property Administration on September 30, 2021 and entitled "METHOD FOR SWITCHING CONFERENCE MODE, APPARATUS, AND MEDIUM", which is incorporated herein by reference in its entirety.

### TECHNICAL FIELD

Embodiments of this application relate to the field of communication technologies, and in particular, to a method for switching a conference mode, an apparatus, and a medium.

### BACKGROUND

With maturity of a 5th generation (5G) communication technology, network transmission bandwidth increases exponentially, video-related services develop rapidly, and services such as a video call and a video conference are widely used in a call center.

In the field of the video conference, a video server needs to process audio and video streams of participants, so that each participant can hear/view expected user's voice/videos. Different conference servers such as a server that is responsible only for forwarding and a server that is responsible for audio mixing and video mixing are deployed in the call center, to provide different conference services. Currently, when a conference service is switched, a media connection between a conference terminal and a conference server needs to be disconnected, and a media connection between the conference terminal and another conference server then needs to be re-established. As a result, this switching takes long time, and user experience is degraded.

### SUMMARY

Embodiments of this application provide a method for switching a conference mode, an apparatus, and a medium, to resolve long time consumed for switching a conference server.

According to a first aspect, an embodiment of this application provides a method for switching a conference mode, applied to a media exchange server. The method includes: The media exchange server receives a trigger instruction sent by a signaling server, and switches, to a second internal media connection based on the trigger instruction, a first internal media connection associated with an external media connection. The external media connection is used to transmit media data of a video conference between a first conference terminal and the media exchange server. The first conference terminal is any conference terminal participating in the conference. The first internal media connection is used to transmit media data of the video conference between the media exchange server and a first conference server. The second internal media connection is used to transmit media data of the video conference between the media exchange server and a second conference server. The first conference server provides a video conference service in a selective forwarding mode, and the second conference server provides a video conference service in a multipoint control mode. Alternatively, the first conference server provides a video conference service in a multipoint control mode, and the second conference server provides a video conference service in a selective forwarding mode.

In the foregoing solution, the media exchange server switches, to the second internal media connection under this indication from the signaling server, the first internal media connection associated with the external media connection, and a procedure of re-accessing the conference terminal to the conference does not need to be performed again. In addition, both the conference server and the media exchange server are in a video conference system, and internal switching time of switching the server is far less than external switching time. Therefore, switching duration of switching the conference service can be shortened. In addition, a participant is not disconnected from the video conference system, so that the participant is almost unaware of the switching of the conference server.

In a possible design, that the media exchange server switches, to a second internal media connection, a first internal media connection associated with an external media connection includes: The media exchange server cancels an association relationship between the external media connection and the first internal media connection, and associates the external media connection with the second internal media connection. According to the foregoing design, when a conference mode needs to be switched, the signaling server triggers disconnection of the association between the external media connection and the first internal media connection, then triggers re-establishment of the association between the external media connection and the second internal media connection, and does not need to perform a procedure of re-accessing the conference terminal to the conference again, so that switching efficiency is improved.

In a possible design, the method may further include: The media exchange server deletes the first internal media connection. According to the foregoing design, when a conference mode needs to be switched, the original first internal media connection is deleted, to release a resource occupied by the first internal media connection, so that resource utilization is improved.

In a possible design, that the media exchange server switches, to a second internal media connection, a first internal media connection associated with an external media connection includes: The media exchange server disconnects the first internal media connection established between the media exchange server and the first conference server, and establishes the second internal media connection between the media exchange server and the second conference server. According to the foregoing design, when a conference mode needs to be switched, the signaling server triggers disconnection of the first internal media connection between the media exchange server and the first conference server, then triggers establishment of the second internal media connection between the media exchange server and the second conference server, and does not need to perform a procedure of re-accessing the conference terminal to the conference again, so that switching efficiency is improved.

In a possible design, the method further includes: Before switching, to the second internal media connection, the first internal media connection associated with the external media connection, the media exchange server creates the external media connection and the first internal media connection.

In some embodiments, the media exchange server establishes the association between the external media connection and the first internal media connection under the triggering of the signaling server.

In a possible design, that the media exchange server creates the external media connection with the first conference terminal includes: The media exchange server receives media port information that is on the first conference terminal and that is sent by the signaling server. The media exchange server sends first media port information on the media exchange server to the first conference terminal via the signaling server. The media port information on the first conference terminal and the first media port information on the media exchange server are used to create the external media connection for the first conference terminal.

In a possible design, that the media exchange server creates the first internal media connection includes: The media exchange server receives a second request sent by the signaling server, where the second request carries media port information on the first conference terminal. The media exchange server sends a second response to the signaling server, where the second response carries first media port information on the media exchange server. The media port information on the first conference terminal and the first media port information on the media exchange server are used to create the external media connection for the first conference terminal. In the foregoing design, the media exchange server exchanges the media port information with the first conference server via the signaling server, to complete the creation of the first internal media connection.

In a possible design, that the media exchange server creates the first internal media connection includes: The second response further carries second media port information on the media exchange server. The media exchange server receives media port information that is on the first conference server and that is sent by the signaling server. The media port information on the first conference server and the second media port information on the media exchange server are used to create the first internal media connection for the first conference terminal.

In a possible design, the method further includes: The media exchange server receives indication information from the signaling server, where the indication information indicates to associate the external media connection with the first internal media connection. The media exchange server establishes an association relationship between the first media port information and the second media port information.

In a possible design, that the media exchange server cancels an association relationship between the external media connection and the first internal media connection includes: The media exchange server cancels the association relationship between the first media port information and the second media port information.

In a possible design, the method further includes: the media exchange server establishes the second internal media connection after receiving a trigger instruction from the signaling server and before associating the external media connection with the second internal media connection.

In a possible design, that the media exchange server establishes the second internal media connection includes: The media exchange server sends third media port information on the media exchange server to the second conference server via the signaling server. The media exchange server receives media port information that is on the second conference server and that is sent by the signaling server. The media port information on the second conference server and the third media port information on the media exchange server are used to create the second internal media connection for the first conference terminal. That the media exchange server associates the external media connection with the second internal media connection includes: The media exchange server establishes an association relationship between the first media port information and the third media port information.

In a possible design, that the media exchange server disconnects the first internal media connection established between the media exchange server and the first conference server includes: The media exchange server deletes the media port information on the first conference server. That the media exchange server establishes the second internal media connection between the media exchange server and the second conference server includes: The media exchange server sends the second media port information on the media exchange server to the second conference server via the signaling server. The media exchange server receives media port information that is on the second conference server and that is sent by the signaling server. The second media port information and the media port information on the second conference server are used to create the second internal media connection. According to the foregoing design, when disconnecting the connection, the media exchange server does not disconnect the association relationship between the first media port information and the second media port information, and only reestablishes the second internal media connection. This not only can improve a switching rate, but also can improve resource utilization.

According to a second aspect, an embodiment of this application provides a method for switching a conference mode, applied to a signaling server. The signaling server is configured to enable a first conference server and a second conference server to provide video conference services in different modes for a conference terminal participating in a conference. The first conference server/second conference server provides a video conference service in a selective forwarding mode/multi-point control mode respectively, or the first conference server/second conference server provides a video conference service in a multipoint control mode/selective forwarding mode respectively. The signaling server is connected to a media exchange server, and the media exchange server is separately connected to the first conference server and the second conference server. The method includes: The signaling server obtains a conference mode switching request. The signaling server triggers, in response to the conference mode switching request, the media exchange server to switch, to a second internal media connection, a first internal media connection associated with an external media connection. The external media connection is used to transmit media data of the video conference between a first conference terminal and the media exchange server. The first conference terminal is any conference terminal participating in the conference. The first internal media connection is used to transmit media data of the video conference between the media exchange server and the first conference server. The second internal media connection is used to transmit media data of the video conference between the media exchange server and the second conference server.

According to the foregoing solution in this application, when a conference mode needs to be switched, or a conference server needs to be switched, only the internal media connection associated with the external media connection needs to be switched, and a procedure of re-accessing the conference terminal to the conference does not need to be performed again. In addition, both the conference server and the media exchange server are in a video conference system, and internal switching time of switching the server is far less than external switching time. Therefore, switching duration of switching the conference service can be shortened. In addition, a participant is not disconnected from the video conference system, so that the participant is almost unaware of the switching of the conference server.

In a possible design, that the signaling server triggers the media exchange server to switch, to a second internal media connection, a first internal media connection associated with an external media connection may be implemented in the following manner: The signaling server triggers the media exchange server to cancel an association relationship between the external media connection and the first internal media connection, and to associate the external media connection with the second internal media connection. According to the foregoing design, when a conference mode needs to be switched, the signaling server triggers disconnection of the association between the external media connection and the first internal media connection, then triggers re-establishment of the association between the external media connection and the second internal media connection, and does not need to perform a procedure of re-accessing the conference terminal to the conference again, so that switching efficiency is improved.

In a possible design, the method further includes: The signaling server further triggers the media exchange server to delete the first internal media connection.

In a possible design, the method may further include: that the signaling server triggers the media exchange server to switch, to a second internal media connection, a first internal media connection associated with an external media connection includes: The signaling server triggers the media exchange server to disconnect the first internal media connection established between the media exchange server and the first conference server, and to establish the second internal media connection between the media exchange server and the second conference server.

In a possible design, the foregoing method further includes: When the first conference terminal joins the video conference, the signaling server triggers the media exchange server to create the external media connection with the first conference terminal, triggers the media exchange server to create the first internal media connection with the first conference server, and triggers the media exchange server to associate the external media connection with the first internal media connection. In the foregoing design, when the conference terminal accesses the video conference, the signaling server triggers the creation of the external media connection and the internal media connection, and triggers the media exchange server to associate the external media connection with the first internal media connection, and video data is forwarded by using the added media exchange server, so that when the conference mode is switched, switching efficiency is improved, and switching latency is shortened.

In a possible design, after the signaling server obtains a conference mode switching request, the method further includes: The signaling server triggers the media exchange server to create the second internal media connection with the second conference server.

In a possible design, the foregoing method may further include: The signaling server receives a first request from the first conference terminal, where the first request includes media port information on the first conference terminal. That the signaling server triggers the media exchange server to create the external media connection with the first conference terminal includes: The signaling server sends a second request to the media exchange server, where the second request is for requesting to establish media port information for the external media connection, and the second request carries the media port information on the first conference terminal. The signaling server receives a second response sent by the media exchange server, where the second response carries first media port information on the media exchange server, and the first media port information on the media exchange device is used to create the external media connection for the first conference terminal. The signaling server sends a first response to the first conference terminal, where the first response carries the first media port information on the media exchange server.

In the foregoing design, when the first conference terminal actively joins the video conference, the signaling server controls exchange of the media port information between the media exchange server and the conference terminal, to implement the establishment of the external media connection. This is simple and effective.

In a possible design, that the signaling server triggers the media exchange server to create the first internal media connection with the first conference server includes: The signaling server receives the second response that is sent by the media exchange server and that further carries second media port information on the media exchange server, where the second media port information on the media exchange device is used to create the first internal media connection for the first conference terminal. The signaling server sends a conference access request to the first conference server, where the conference access request is for requesting the first conference terminal to connect the first conference server, and the conference access request carries the second media port information on the media exchange server. The signaling server receives a first conference access response sent by the first conference server, where the first conference access response carries media port information on the first conference server. The signaling server sends the media port information on the first conference server to the media exchange server.

In the foregoing design, the signaling server controls exchange of the media port information between the media exchange server and the conference server, to implement the establishment of the internal media connection. This is simple and effective. In addition, the media exchange server allocates the media port information for the external media connection to the conference terminal, and also allocates the media port information for the internal media connection to the signaling server, so that when triggering the establishment of the internal media connection, the signaling server does not need to send an application request again to apply for the media port information, thereby improving efficiency of creating the media connection and reducing latency.

In a possible design, the foregoing method further includes: The signaling server receives a first request from a second conference terminal, where the first request is for requesting the first conference terminal to access the video conference. That the signaling server triggers the media exchange server to create the external media connection with the first conference terminal includes: The signaling server sends a second request to the media exchange server, where the second request is for requesting to establish first media port information for the external media connection. The signaling server receives a second response sent by the media exchange server, where the second response carries first media port information on the media exchange server. The method further includes: The signaling server sends a first response to the first conference terminal, where the first response carries the first media port information on the media exchange server.

In the foregoing design, the first conference terminal may join the video conference due to invitation of the second conference terminal, and the signaling server controls exchange of the media port information between the media exchange server and the first conference terminal, to implement the establishment of the external media connection. This is simple and effective.

In a possible design, that the signaling server triggers the media exchange server to create the first internal media connection with the first conference server includes: The second request is further for requesting to establish second media port information for the first internal media connection, and the second response further carries second media port information on the media exchange server. The signaling server sends a conference access request to the first conference server, where the conference access request is for requesting the first conference terminal to connect the first conference server, and the conference access request carries the second media port information on the media exchange server. The signaling server receives a conference access response sent by the first conference server, where the conference access response carries media port information on the first conference server. The signaling server sends the media port information on the first conference server to the media exchange server.

In the foregoing design, the signaling server controls exchange of the media port information between the media exchange server and the conference server, to implement the establishment of the internal media connection. This is simple and effective. In addition, the media exchange server allocates the media port information for the external media connection to the conference terminal, and also allocates the media port information for the internal media connection to the signaling server, so that when triggering the establishment of the internal media connection, the signaling server does not need to send an application request again to apply for the media port information, thereby improving efficiency of creating the media connection and reducing latency.

In a possible design, that the signaling server triggers the media exchange server to associate the external media connection with the first conference terminal with the first internal media connection includes: The signaling server sends a first association request to the media exchange server, where the first association request indicates the media exchange server to establish an association relationship between the first media port information and the second media port information.

In a possible design, that the signaling server triggers the media exchange server to associate the external media connection with the first conference terminal with the first internal media connection includes: The second request sent by the signaling server to the media exchange server further indicates the media exchange server to establish an association relationship between the first media port information and the second media port information.

In the foregoing design, when triggering the application for the media port information used for the external media connection and the internal media connection, the signaling server also indicates to associate the two media port information with each other, to automatically associate the external media connection and the internal media connection after the creation of the external media connection and the internal media connection is completed, and subsequently, does not need to separately send a message to trigger the media exchange server to associate the two internal media connections with the external media connection, thereby improving efficiency of joining the video conference terminal and reducing latency.

In a possible design, that the signaling server triggers the media exchange server to disconnect an association between the external media connection and the first internal media connection includes: The signaling server sends a disassociation request to the media exchange server, where the disassociation request indicates the media exchange server to cancel the association relationship between the first media port information and the second media port information.

In the foregoing design, the association between the external media connection and the first internal media connection is disconnected by canceling the association relationship between the media port information. This is simple and effective.

In a possible design, that the signaling server triggers the media exchange server to create the second internal media connection with the second conference server includes: The signaling server sends a third request to the media exchange server, where the third request is for requesting to establish third media port information for the second internal media connection. The signaling server receives a third response sent by the media exchange server, where the third response carries the third media port information. The signaling server sends a second conference access request to the second conference server, where the second conference access request is for requesting the first conference terminal to connect the second conference server, and the second conference access request carries the third media port information. The signaling server receives a second conference access response sent by the second conference server, where the second conference access response carries media port information on the second conference server. The signaling server sends the media port information on the second conference server to the media exchange server.

In a possible design, that the signaling server triggers the media exchange server to associate the external media connection with the second internal media connection includes: The signaling server sends a second association request to the media exchange server, where the second association request indicates the media exchange server to establish an association relationship between the first media port information and the third media port information.

In a possible design, that the signaling server triggers the media exchange server to disconnect the first internal media connection established between the media exchange server and the first conference server includes: The signaling server triggers the media exchange server to delete the media port information on the first conference server.

In a possible design, that the signaling server establishes the second internal media connection between the media exchange server and the second conference server includes: The signaling server sends a second conference access request to the second conference server, where the second conference request is for requesting the first conference terminal to connect the second conference server, and the second conference access request carries the first media port information. The signaling server receives a second conference access response sent by the second conference server, where the second conference access response carries media port information on the second conference server. The signaling server sends the media port information on the second conference server to the media exchange server.

In a possible design, after the signaling server obtains a conference mode switching request, the method further includes: The signaling server separately indicates the first conference server and the media exchange server to delete the first internal media connection.

In the foregoing design, during mode switching, the signaling server controls the deletion of the first internal media connection, to reduce resource occupation.

In a possible design, that the signaling server obtains a conference mode switching request includes: The signaling server receives the conference mode switching request sent by a third conference terminal. The third conference terminal is a conference terminal that is in conference terminals participating in the conference and that supports enabling of a conference recording service.

In the foregoing design, a conference mode switching scenario is provided, where the conference terminal that supports the enabling of the conference recording service triggers enabling of conference recording, so that the signaling server obtains the conference mode switching request.

In a possible design, the conference terminals participating in the conference include at least two user terminal devices, or include a user terminal device and a service agent terminal device, or include a user terminal device, a service agent terminal device, the user terminal device, the service agent terminal device, and an expert terminal device.

According to a third aspect, this application provides a communication apparatus, used in a media exchange server or a chip in a media exchange server, and including a module or a means (means) configured to perform the method in any one of the first aspect or the possible implementations of the first aspect.

According to a fourth aspect, this application provides a communication apparatus, used in a signaling server or a chip in a signaling server, and including a module or a means configured to perform the method in any one of the second aspect or the possible implementations of the second aspect.

According to a fifth aspect, this application provides a communication apparatus, used in a media exchange server or a chip in a media exchange server, and including at least one processor and at least one memory, where the at least one memory is configured to store a program and data, and the at least one processor is configured to perform the method in any one of the first aspect or the possible implementations of the first aspect.

According to a sixth aspect, this application provides a communication apparatus, used in a signaling server or a chip in a signaling server, and including at least one processor and at least one memory, where the at least one memory is configured to store a program and data, and the at least one processor is configured to perform the method in any one of the second aspect or the possible implementations of the second aspect.

According to a seventh aspect, this application provides a communication apparatus, used in a media exchange server or a chip in a media exchange server, and including a processor and an interface circuit. The interface circuit is configured to: receive a signal from another communication apparatus other than the communication apparatus and transmit the signal to the processor, or send a signal from the processor to another communication apparatus other than the communication apparatus. The processor is configured to implement the method in any one of the first aspect or the possible implementations of the first aspect by using a logic circuit or executing code instructions.

According to an eighth aspect, this application provides a communication apparatus, used in a signaling server or a chip in a signaling server, and including a processor and an interface circuit. The interface circuit is configured to receive: a signal from another communication apparatus other than the communication apparatus and transmit the signal to the processor, or send a signal from the processor to another communication apparatus other than the communication apparatus. The processor is configured to implement the method in any one of the second aspect or the possible implementations of the second aspect by using a logic circuit or executing code instructions.

According to a ninth aspect, an embodiment of this application provides a communication system, including the apparatus according to the third aspect and the apparatus according to the fourth aspect, or including the apparatus according to the fifth aspect and the apparatus according to the sixth aspect, or including the apparatus according to the seventh aspect and the apparatus according to the eighth aspect. The communication system further includes a first conference server and a second conference server.

In a possible design, the first conference server provides a video conference service in a selective forwarding mode, and the second conference server provides a video conference service in a multipoint control mode. Alternatively, the first conference server provides a video conference service in a multipoint control mode, and the second conference server provides a video conference service in a selective forwarding mode. The signaling server obtains a conference mode switching request, and sends a trigger instruction to the media exchange server based on the conference mode switching request. The media exchange server switches, to a second internal media connection based on the trigger instruction, a first internal media connection associated with an external media connection. The external media connection is used to transmit media data of a video conference between a first conference terminal and the media exchange server. The first conference terminal is any conference terminal participating in the conference. The first internal media connection is used to transmit media data of the video conference between the media exchange server and the first conference server. The second internal media connection is used to transmit media data of the video conference between the media exchange server and the second conference server.

According to a tenth aspect, this application provides a computer program product. The computer program product includes computer instructions. When the computer instructions are executed, the method according to any one of the first aspect or the possible implementations of the first aspect is performed.

According to an eleventh aspect, this application provides a computer program product. The computer program product includes computer instructions. When the computer instructions are executed, the method according to any one of the second aspect or the possible implementations of the second aspect is performed.

According to a twelfth aspect, this application provides a computer-readable storage medium. The computer storage medium stores computer instructions. When the computer instructions are executed, the method according to any one of the first aspect or the possible implementations of the first aspect is performed, or the method according to any one of the fourth aspect or the possible implementations of the fourth aspect is performed.

According to a thirteenth aspect, this application provides a computer-readable storage medium. The computer storage medium stores computer instructions. When the computer instructions are executed, the method according to any one of the second aspect or the possible implementations of the second aspect is performed.

For descriptions of beneficial effects of the third aspect to the thirteenth aspect, refer to descriptions of the first aspect and the second aspect. Details are not described herein again.

### BRIEF DESCRIPTION OF DRAWINGS

FIG. 1 is a schematic diagram of an architecture of a communication system in an SFU mode;
FIG. 2 is a schematic diagram of an architecture of a communication system in an MCU mode;
FIG. 3 is a schematic diagram of an architecture of a call center system;
FIG. 4A and FIG. 4B are a schematic flowchart of triggering conference recording;
FIG. 5A is a schematic diagram of an architecture of a video conference system according to an embodiment of this application;
FIG. 5B is a schematic diagram of an architecture of a video conference system according to an embodiment of this application;
FIG. 6A is a possible schematic flowchart of a method for switching a conference mode according to an embodiment of this application;
FIG. 6B is a possible schematic flowchart of a method for switching a conference mode according to an embodiment of this application;
FIG. 6C is a possible schematic flowchart of establishing a video conference according to an embodiment of this application;
FIG. 6D is a possible schematic flowchart of establishing a media connection for a second conference terminal according to an embodiment of this application;
FIG. 7 is another possible schematic flowchart of establishing a video conference according to an embodiment of this application;
FIG. 8 is a schematic flowchart of transmitting an audio and video stream in an SFU mode according to an embodiment of this application;
FIG. 9A is a schematic flowchart of switching a conference mode according to an embodiment of this application;
FIG. 9B is another schematic flowchart of switching a conference mode according to an embodiment of this application;
FIG. 9C is still another schematic flowchart of switching a conference mode according to an embodiment of this application;
FIG. 9D is yet another schematic flowchart of switching a conference mode according to an embodiment of this application;

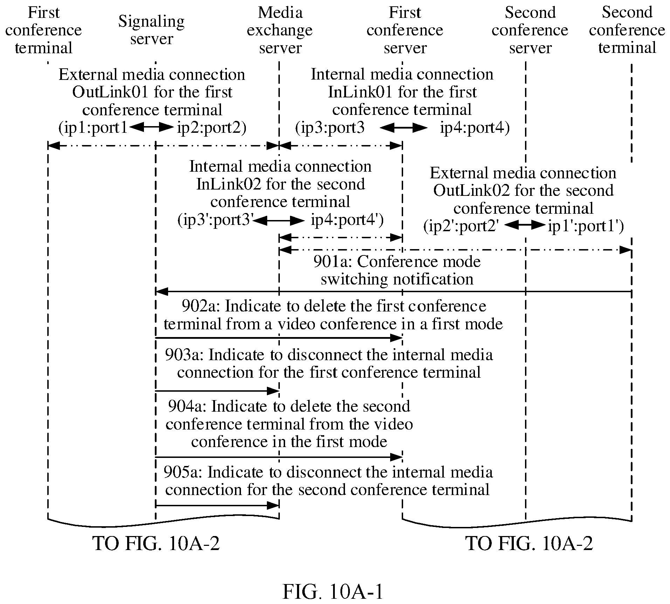

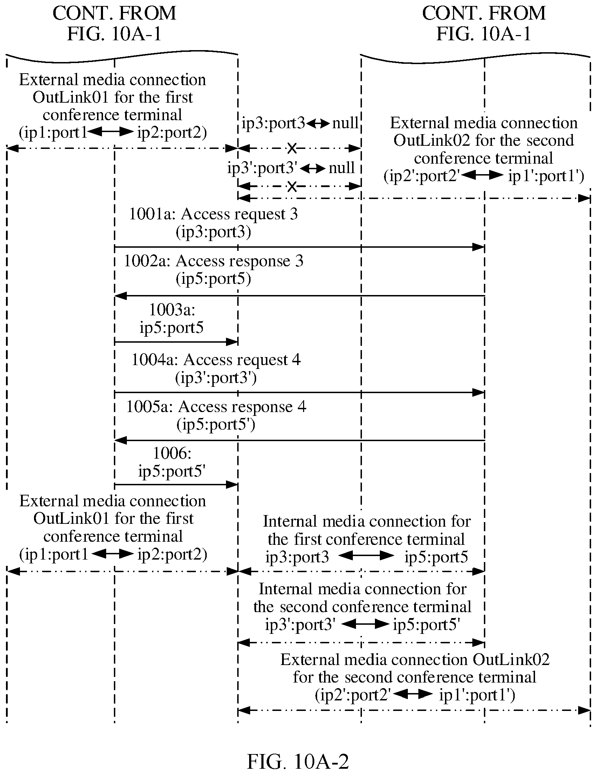

FIG. 10A-1 and FIG. 10A-2 are a schematic flowchart of creating a video conference in a second mode according to an embodiment of this application;

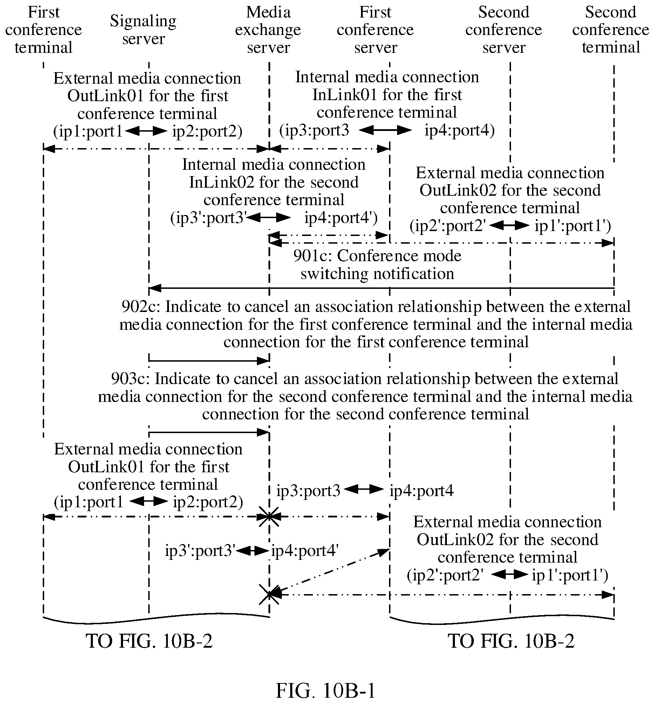

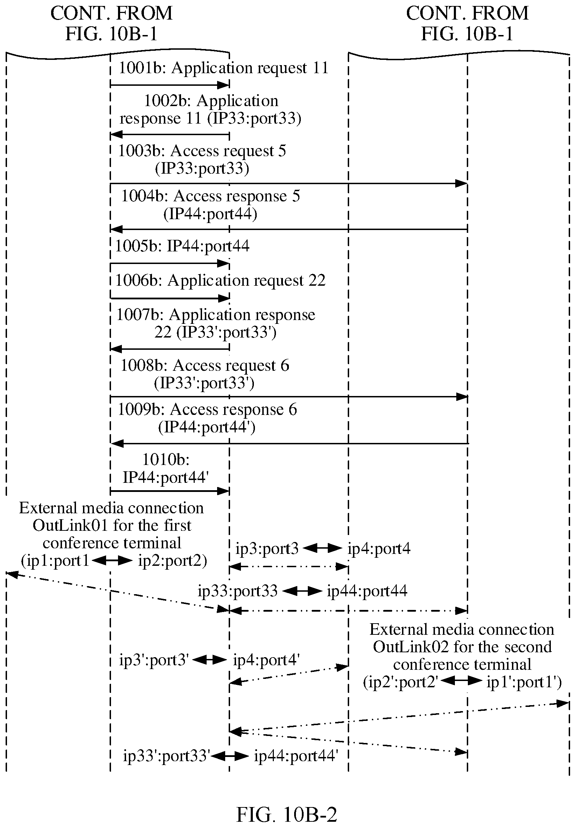

FIG. 10B-1 and FIG. 10B-2 are another schematic flowchart of creating a video conference in a second mode according to an embodiment of this application;

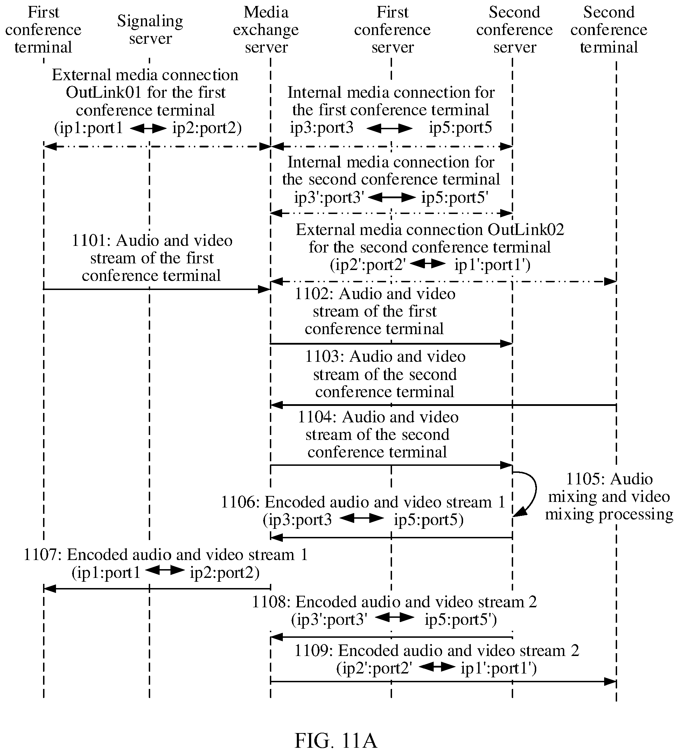

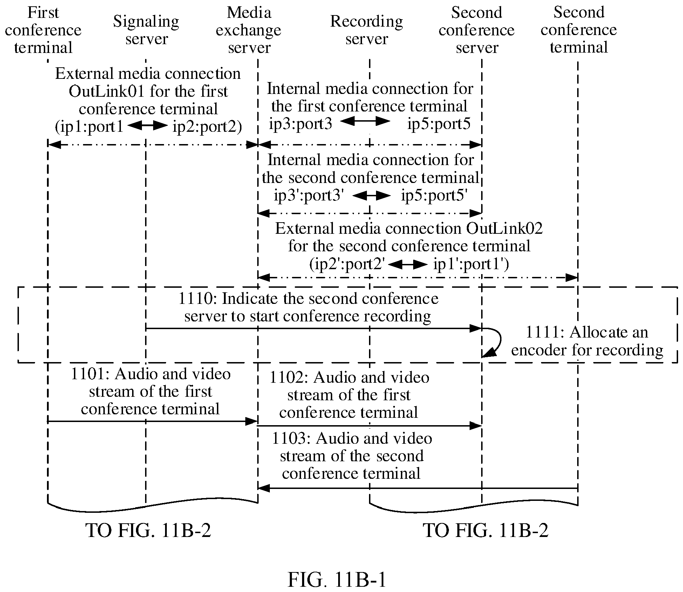

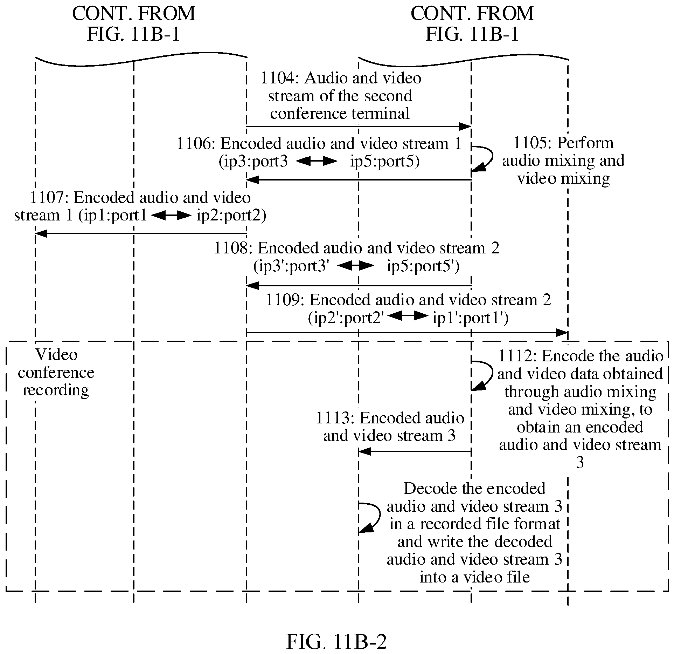

FIG. 11A is a schematic flowchart of transmitting an audio and video stream in an MCU mode according to an embodiment of this application;
FIG. 11B-1 and FIG. 11B-2 are another schematic diagram of transmitting an audio and video stream in an MCU mode according to an embodiment of this application;

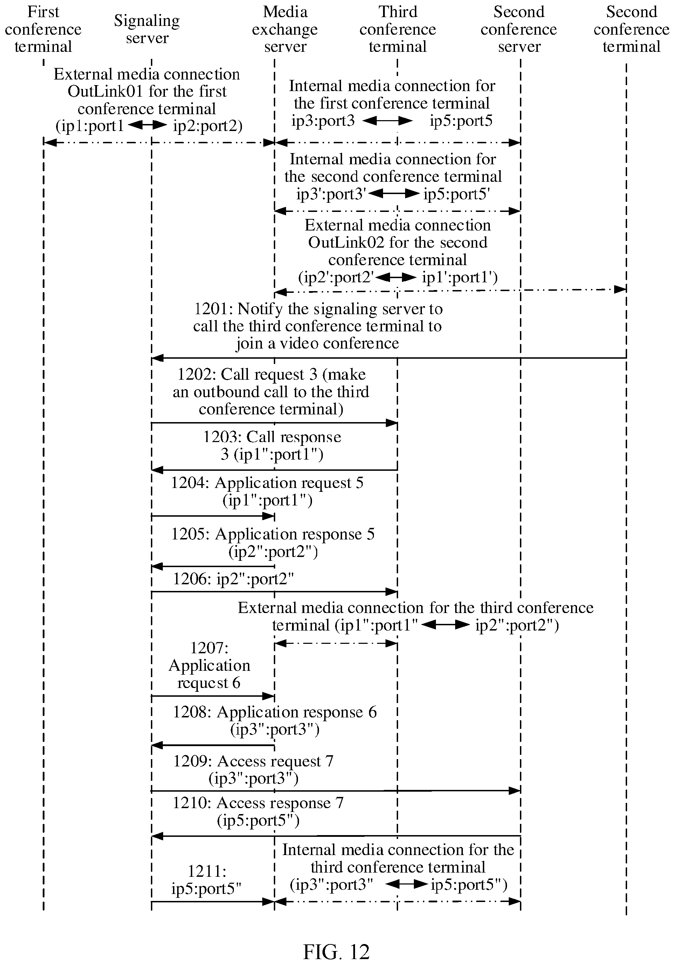

FIG. 12 is a schematic flowchart of inviting another conference terminal to join a video conference according to an embodiment of this application;

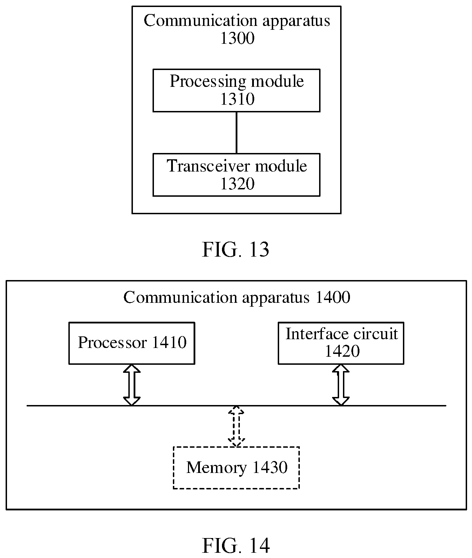

FIG. 13 is a schematic diagram of a structure of a communication apparatus 1300 according to an embodiment of this application; and
FIG. 14 is a schematic diagram of a structure of a communication apparatus 1400 according to an embodiment of this application.

### DESCRIPTION OF EMBODIMENTS

To make the objectives, technical solutions, and advantages of embodiments of this application clearer, the following clearly and completely describes the technical solutions in embodiments of this application with reference to the accompanying drawings in embodiments of this application. It is clear that the described embodiments are merely some rather than all of embodiments of this application. All other embodiments obtained by a person of ordinary skill in the art based on embodiments of this application without creative efforts shall fall within the protection scope of this application.

The following describes technical concepts in this application.
(1) A video stream processing mode includes a selective forwarding unit (selective forwarding unit, SFU) mode and a multipoint control unit (multipoint conferencing unit, MCU) mode.

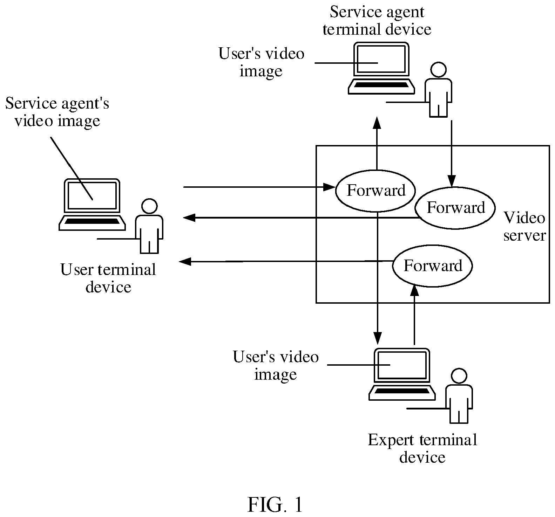

The SFU mode may also be referred to as a stream forwarding mode or a selective forwarding mode. In the SFU mode, a video server and a plurality of terminal devices may form a communication system. After receiving an audio and video stream shared by a terminal device, the video server directly forwards the audio and video stream to another terminal device in a conference. The video server is actually an audio and video routing forwarder. In the SFU mode, the video server may also be referred to as an SFU conference server or an SFU for short. The SFU does not need to perform audio and video transcoding. As shown in FIG. 1, a user terminal device, a service agent terminal device, and a service expert terminal device forward audio and video streams to each other via an SFU, where the service agent terminal device and the service expert terminal device display a user's video image, and the user terminal device displays a service agent' video image.

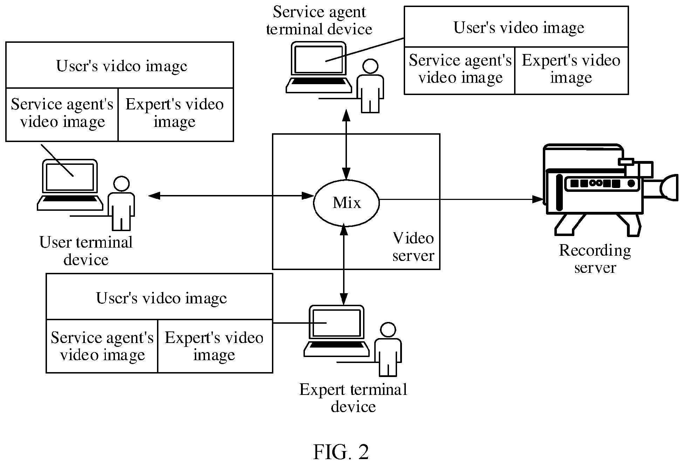

The MCU mode may also be referred to as a multipoint control mode or a mixing mode. In the MCU mode, a video server and a plurality of terminal devices form a communication system. The video server mixes audio and video streams generated by all terminal devices in a same conference, generates a mixed audio and video stream, and then sends the mixed audio and video stream to each terminal device. Each terminal device may display video streams of other terminal devices and play the audio streams of the other terminal devices. In the MCU mode, the video server is an audio and video mixer, and the video server may also be referred to as an MCU conference server or an MCU for short. As shown in FIG. 2, in the MCU mode, video images of the user terminal device, the service agent terminal device, and the service expert terminal device are orchestrated and mixed via the video server and then displayed in a same video image.

In following descriptions, for ease of differentiation, a video server corresponding to the SFU conference mode is referred to as an SFU conference server, a video server corresponding to the MCU conference mode is referred to as an MCU conference server, a conference resource allocated to the SFU conference server is referred to as an SFU conference resource, and a conference resource allocated to the MCU conference server is referred to as an MCU conference resource.

(2) A user may be understood as a user of an ordinary terminal device. The user may access a conference by using a telephony application (telephony application) dial plate, another application (application, APP) that is not default in a system, or the like. The terminal device used by the user may be referred to as a user terminal device. The user terminal device may be a device such as a mobile phone (for example, a phone), a tablet computer, or a notebook computer.

The user terminal device may be a voice over long-term evolution (voice over long-term evolution, VoLTE) terminal device. The VoLTE terminal device may be a terminal device such as a phone/tablet computer that accesses an LTE network, for example, may make a call by using a dial plate (application, APP) provided by an Android (Android)^{®}, iOS^{®}, or HarmonyOS^{®} system.

The user terminal device may be a voice over internet protocol (internet protocol IP) (voice over internet protocol, VoIP) terminal device. The VoIP terminal device makes a VoIP call by using a dial plate of an application APP installed by the VoIP terminal device. For example, the VoIP terminal device may be a terminal device such as a personal computer (personal computer, PC) PC/phone/tablet computer that accesses an Internet.

It can be noted that a telecommunication network that can be actually accessed by the "VoLTE terminal device" in this application is not limited to the LTE network, or may be a 5G network, a 6G network, or the like. This is not limited in this embodiment of this application.

(3) A service agent may be understood as an agent of a call center, and is mainly responsible for handling service consultation, service handling, and the like of users.

A terminal device used by the service agent may be referred to as a service agent terminal device. The service agent accesses the call center via the service agent terminal device to make an audio and video call. For example, the service agent terminal device may be a session initiation protocol (session initiation protocol, SIP) softphone installed on a PC or a thin client (Thin Client, TC) terminal. In some possible scenarios, the service agent terminal device has a control end, and the service agent can implement functions such as call control, recording control, call transfer, and help seeking via the control end.

(4) A service expert may be understood as a senior agent of a call center, and may be referred to as an expert. When a service agent cannot resolve a user problem, the service agent needs to ask the service expert for help. A device used by the expert may be referred to as an expert terminal device. The expert terminal device may be a mobile phone (for example, a phone), a tablet computer, a notebook computer, a session initiation protocol (session initiation protocol, SIP) softphone installed on a PC, a thin client (Thin Client, TC) terminal, or the like.

(5) User inbound call service. A user inbound call service means that after a user dials an access number (for example, 10086) of a call center, the call center allocates a service agent to process the specific service.

(6) Service agent outbound call service: An outbound call service means that a service agent controls a call center to call a number of a user and adds the user to a conference for conversation.

(7) A call center (Call Center), also referred to as a customer service center, is a service organization that includes a group of service personnel in a relatively centralized place through a plurality of communication media (such as telephone, fax, internet access, email, video, and short message), and processes telephone inquiries from enterprises and customers by using computer communication technologies. The call center may include two roles: a service agent and a service expert. In some embodiments, the service agent and the service expert use respective terminal devices to establish communication connections with a user terminal device via a call center system.

Embodiments of this application may be applied to the call center system, or may be applied to another system that needs to perform a video conference.

For example, embodiments of this application are applied to the call center system. The following several scenarios in which embodiments of this application are applied to the call center system may be included. In a first possible scenario, a user and a service agent have a two-party call. In a second possible scenario, the user, the service agent, and the expert have a three-party call.

In an example, when the user dials a number of the call center and this call is transferred to a manual service, an SFU mode is usually preferred to implement a call between the user and the service agent to reduce calculation costs. During a call, if a recording function needs to be enabled, or an expert needs to join and all the three parties need to view other parties' pages, the call is switched to an MCU mode.

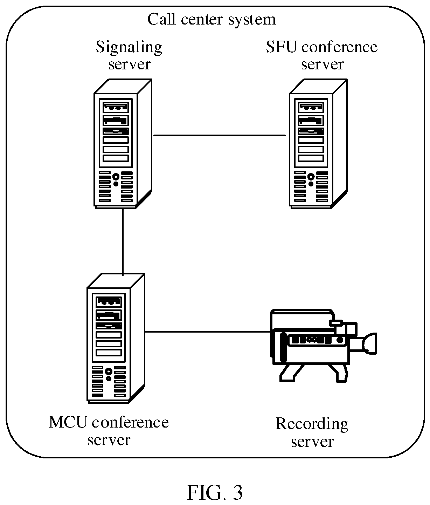

For example, FIG. 3 is a possible schematic diagram of an architecture of a call center system. The call center system includes a signaling server, an MCU conference server, and an SFU conference server. The signaling server is configured to control access of a user, a service agent, or an expert to the SFU conference server or the MCU conference server, to implement communication between the user and the service agent or between the user, the service agent, and the expert. The SFU conference server is configured to implement forwarding of media data between the user, the service agent, and the expert. The MCU conference server is configured to implement mixing and forwarding of the media data between the user, the service agent, and the expert. The SFU conference server and the MCU conference server are completely separated from each other, and respectively provide different conference functions. The SFU conference server uses fewer computing resources, while the MCU conference server uses more computing resources.

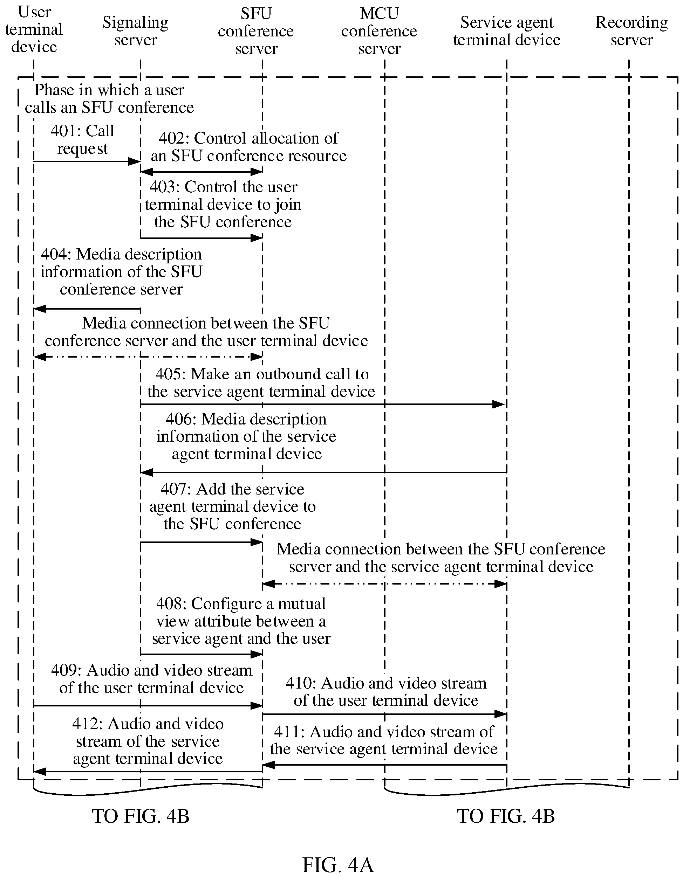

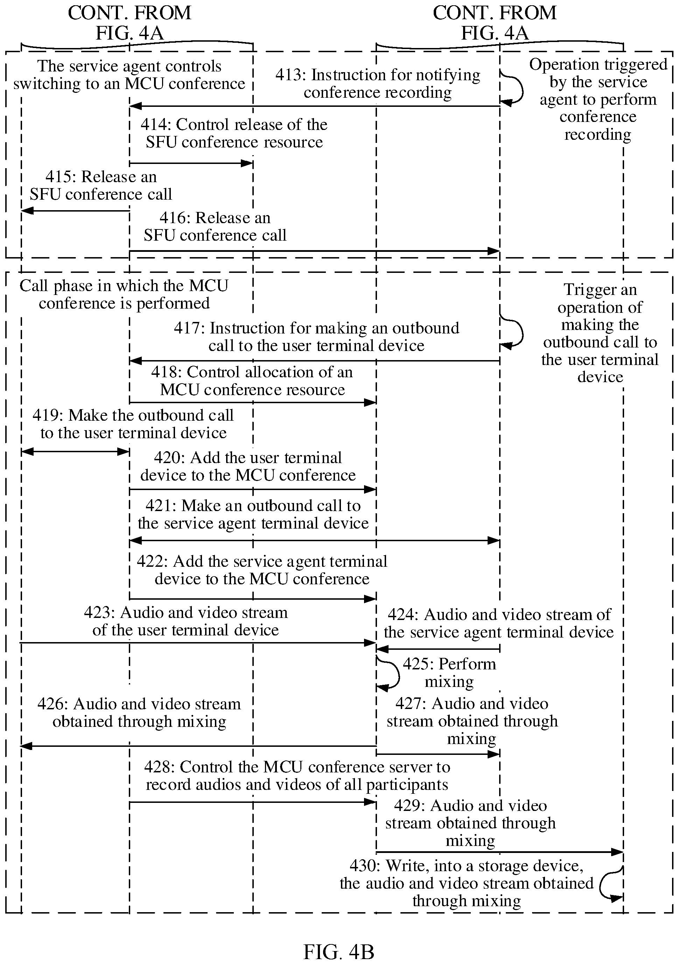

With reference to FIG. 4A and FIG. 4B, the following describes a procedure in which a user calls a service agent, and the service agent triggers recording. For example, when a user terminal device dials an access code of a call center, is transferred to a manual service, and is uniformly added by a signaling server to an SFU conference server. The user terminal device and a service agent terminal device talk for a period of time. Based on an actual situation of this call, the service agent determines that a conference recording operation needs to be performed, the service agent terminal device triggers the conference recording operation, and then notifies, in a voice manner, the user terminal device to hang up, and the user terminal device waits for the call center that makes an outbound call. After the user hangs up, the service agent terminal device initiates switching to an MCU conference mode, makes the outbound call to the user terminal device, and adds the user terminal device to an MCU conference to implement the call and recording.

Step 401: The user terminal device triggers an active call to the call center, that is, initiates, to the signaling server, a call request for calling the call center.

The user terminal device may initiate the call request to the signaling server via an IMS core network.

For example, the call request may carry media description information that is of the user terminal device and that is used to create a media connection between the user terminal device and the SFU conference server, for example, including media port information and media encoding and decoding capability information of the user terminal device.

Step 402: After receiving the call request from the user terminal device, the signaling server controls the SFU conference server to allocate an SFU conference resource. It may be understood that, the signaling server requests the SFU conference server to allocate the SFU resource to the user terminal device, and the SFU conference server then sends, to the signaling server, the SFU resource allocated to the user terminal device.

For example, the SFU conference resource may include media description information that is of the SFU conference server and that is used to create a media connection between the SFU conference server and the user terminal device, for example, including media port information and media encoding and decoding capability information of the SFU conference server.

The SFU conference resource may alternatively include media description information that is of the SFU conference server and that is used to create a media connection between the SFU conference server and the service agent terminal device, for example, including media port information and media encoding and decoding capability information of the SFU conference server. For example, the media description information may use a session description protocol (session description protocol, SDP) format.

Step 403: The signaling server adds the media connection for the user terminal device to the SFU conference server. It may be understood that the media description information of the user terminal device is sent to the SFU conference server. The SFU conference server creates an association relationship between the media port information of the user terminal device and the media port information of the SFU conference server.

Step 404: The signaling server sends the media description information of the SFU conference server to the user terminal device. The user terminal device creates an association relationship between the media port information of the user terminal device and the media port information of the SFU conference server.

Through step 401 to step 404, the media connection is established between the user terminal device and the SFU conference server, for example, is indicated by using a dashed line between the SFU conference server and the user terminal device in FIG. 4A and FIG. 4B.

Step 405: The signaling server makes an outbound call to the service agent terminal device. For example, the media description information that is of the SFU conference server and that is used to create the media connection between the SFU conference server and the service agent terminal device is sent to the service agent terminal device.

Step 406: The signaling server receives media description information of the service agent terminal device. The media description information of the service agent terminal device includes media port information and media encoding and decoding capability information of the service agent terminal device. The SFU conference server creates an association relationship between the media port information of the service agent terminal device and the media port information of the SFU conference server.

Step 407: The signaling server adds the service agent terminal device to an SFU conference. For example, the signaling server may send the media description information of the SFU conference server to the service agent terminal device. After receiving the media description information of the SFU conference server, the service agent terminal device creates an association relationship between the media port information of the service agent terminal device and the media port information of the SFU conference server.

Through step 405 to step 407, the media connection is established between the SFU conference server and the service agent terminal device, for example, is indicated by using a dashed line between the SFU conference server and the service agent terminal device in FIG. 4A and FIG. 4B.

After both the service agent terminal device and the user terminal device join the conference, the signaling server may configure a mutual view attribute between participants. In some embodiments, different scenarios may have different configurations. During a call between the service agent and the user, it may be configured that the service agent views a user's video image, and the user views a service agent's video image. Refer to step 408. In an SFU mode, during a video conference between a plurality of parties, for example, it may be configured that both the service agent and an expert view a user's video image, and the user views a service agent's video image.

Step 408: The signaling server configures a mutual view attribute between the service agent and the user on the SFU conference server.

Step 409: After generating an audio and video stream, the user terminal device sends the audio and video stream to the SFU conference server. For example, the audio and video stream may use an RTP format, or may use another format. This is not specifically limited in this application.

Step 410: The SFU conference server forwards the audio and video stream of the user terminal device to the service agent terminal device based on the configured mutual view attribute.

For example, the SFU conference server may update an RTP header of the audio and video stream from the user terminal device based on the media connection between the SFU conference server and the service agent terminal device, and then forward the updated RTP header of the audio and video stream to the service agent terminal device.

Step 411: After generating an audio and video stream, the service agent terminal device sends the audio and video stream to the SFU conference server. For example, the audio and video stream may use an RTP format, or may use another format. This is not specifically limited in this application.

Step 412: The SFU conference server forwards the audio and video stream of the service agent terminal device to the user terminal device based on the configured mutual view attribute.

For example, the SFU conference server may update an RTP header of the audio and video stream from the service agent terminal device based on the media connection between the SFU conference server and the user terminal device, and then forward the updated RTP header of the audio and video stream to the user terminal device.

It should be understood that step 409 and step 410 may be performed in parallel with step 411 and step 412.

According to the foregoing solution, the user terminal device communicates with the service agent terminal device. The following describes an operation triggered by the service agent to perform conference recording.

Step 413: After receiving the operation triggered by the service agent to perform conference recording, the service agent terminal device sends, to the signaling server, an instruction for notifying the conference recording.

Step 414: The signaling server controls the SFU conference server to release the SFU conference resource. The releasing the SFU conference resource may be understood as releasing the media description information that is of the SFU conference server and that is used to create the media connection between the SFU conference server and the user terminal device, and the media description information used to create the media connection between the SFU conference server and the service agent terminal device. The SFU conference server deletes the association relationship between the media port information of the service agent terminal device and the media port information of the SFU conference server, and the association relationship between the media port information of the SFU conference server and the media port information of the service agent terminal device.

Step 415: The signaling server controls the user terminal device to release an SFU conference call.

Step 416: The signaling server controls the service agent terminal device to release an SFU conference call. In this case, the user and the service agent can perceive that the call is disconnected.

Step 417: The service agent triggers, via the service agent terminal device, an operation of making an outbound call to the user terminal device, and sends, to the signaling server, an instruction for making the outbound call to the user terminal device. The instruction for making the outbound call to the user terminal device may include a user identifier of the terminal device, for example, a user number.

Step 418: The signaling server controls the MCU conference server to allocate an MCU conference resource.

For example, the MCU conference resource may include media description information that is of the MCU conference server and that is used to create a media connection between the MCU conference server and the user terminal device, for example, including media port information and media encoding and decoding capability information of the MCU conference server.

The MCU conference resource may alternatively include media description information that is of the MCU conference server and that is used to create a media connection between the MCU conference server and the service agent terminal device, for example, including media port information and media encoding and decoding capability information of the MCU conference server.

Step 419: The signaling server makes the outbound call to the user terminal device. For example, the signaling server obtains the media description information of the user terminal device from the user terminal device, and sends, to the user terminal device, the media description information that is of the MCU conference server and that is used to create the media connection between the MCU conference server and the user terminal device.

Step 420: The signaling server adds the user terminal device to the MCU conference. The signaling server sends the media description information of the user terminal device to the MCU conference server.

Step 421: The signaling server makes an outbound call to the service agent terminal device. For example, the signaling server obtains the media description information of the service agent terminal device from the service agent terminal device, and sends, to the service agent terminal device, the media description information that is of the MCU conference server and that is used to create the media connection between the MCU conference server and the service agent terminal device.

Step 422: The signaling server adds the service agent terminal device to an MCU conference. The signaling server sends the media description information of the service agent terminal device to the MCU conference server.

Step 423: After generating an audio and video stream, the user terminal device sends the audio and video stream to the MCU conference server. For example, the audio and video stream may use an RTP format, or may use another format. This is not specifically limited in this application.

Step 424: After generating an audio and video stream, the service agent terminal device sends the audio and video stream to the MCU conference server.

In step 423 and step 424, the user terminal device and the service agent terminal device send the respective audio and video streams to the MCU conference server, where the two may send the audio and video streams in parallel.

Step 425: The MCU conference server performs mixing on the plurality of input audio and video streams, including audio mixing and video mixing.

Steps 426 and 427: The MCU conference server sends, to the user terminal device and the service agent terminal device, an audio and video stream obtained through mixing.

It can be noted that steps of audio and video encoding and decoding inside the MCU conference server are omitted in the flowchart. For example, after a video stream input by the user terminal device or the service agent terminal device arrives at the MCU conference server, video decoding is first performed, and the MCU conference server performs video mixing on a video obtained by decoding the video stream generated by the user terminal device and a video obtained by decoding the video stream generated by the service agent terminal device, performs encoding and compression on a mixed video, and then sends the mixed video to the user terminal device and the service agent terminal device.

Step 428: The signaling server controls the MCU conference server to record audios and videos of all the participants.

Step 429: The MCU conference server sends, to a recording server, the audio and video stream obtained through audio mixing and video mixing.

In some embodiments, after completing step 422, the signaling server may send a conference recording instruction to the MCU conference server. After completing step 425, the MCU conference server sends, to the recording server, the audio and video stream obtained through audio mixing and video mixing.

Step 430: The recording server writes, into a storage device in a video file format, the audio and video stream obtained through mixing.

In a call center system, a quantity of concurrent services is very large in the call center. Therefore, when a user terminal device initiates a conference call for access, the SFU conference server is usually used by default, to reduce computing resources. When starting the recording, the service agent needs to perform switching from an SFU conference mode to an MCU conference mode. It can be learned from FIG. 4A and FIG. 4B that the signaling server controls the switching between the conference modes. During the switching, the existing conference resource needs to be released, and a conference connection between the user terminal device and the service agent terminal device needs to be released. In addition, the service agent terminal device re-initiates an outbound call to the user terminal device, and the signaling server controls the MCU conference server to create a conference resource, to implement the conference connection between the user terminal device and the service agent terminal device. When the signaling server controls the switching of the conference between the SFU conference mode and MCU conference mode, the call is disconnected, and the user terminal device joins the conference again after the user terminal device waits for the service agent terminal device to initiate the outbound call. As a result, the switching between the SFU conference mode and MCU conference mode takes long time. The switching takes long time. As a result, working efficiency of the service agent is reduced, and human resource utilization is further reduced. In addition, waiting duration of the user terminal device is increased. In addition, when the signaling server controls the switching of the conference between the SFU conference mode and the MCU conference mode, the user terminal device needs to be re-connected after the call is disconnected, resulting in poor user experience.

In this embodiment of this application, a media exchange server is disposed in a video conference system to shorten switching duration, so that a media connection is established between a conference terminal of the video conference and the conference server via the media exchange server. The media connection for the conference terminal includes an external media connection between the conference terminal and the media exchange server and an internal media connection between the media exchange server and the conference server. When the conference mode needs to be switched, the external media connection remains unchanged, but the internal media connection before the mode switching associated with the external media connection is switched to an internal media connection after the mode switching. However, because both the conference server and the media exchange server are in the video conference system, switching time of the association relationship is far less than time required for disconnecting and then reestablishing the media connection between the conference terminal and the conference server. Therefore, the switching duration of switching the conference service can be shortened. In addition, a participant is not disconnected from the video conference system, so that the participant is almost unaware of the switching of the conference server.

It may be understood that a name of the "media exchange server" is merely an example, and in some cases, may also be referred to as a "conference bridging server", a "conference proxy server", a "conference media connection management server", or a "conference switching server". A name of this device is not limited in this embodiment of this application, and the "media exchange server" is used as an example in subsequent embodiments.

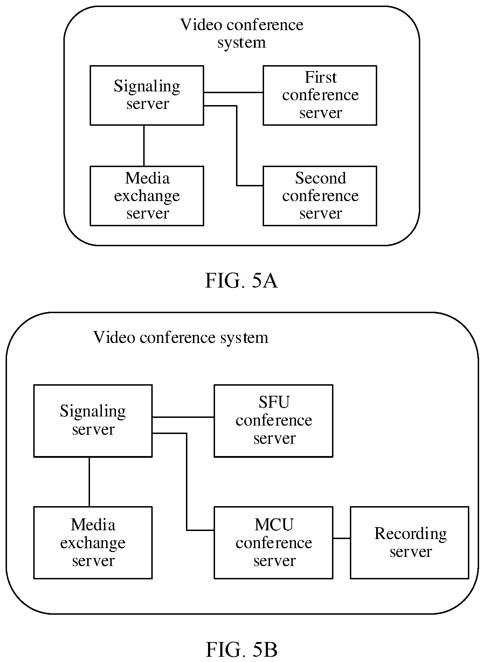

FIG. 5A is a possible schematic diagram of an architecture of a video conference system according to an embodiment of this application. The video conference system includes a first conference server, a second conference server, a media exchange server, and a signaling server. In some embodiments, the video conference system may further include another conference server. It can be noted that different conference servers provide different conference services. In an example, the first conference server provides a first conference service, and the second conference server provides a second conference service.

Conference terminals participating in a video conference may include a plurality of user terminal devices, or include a user terminal device and a service agent terminal device, or include a user terminal device, a service agent terminal device, or an expert terminal device. For example, the user terminal device is a VoIP terminal device. The VoIP terminal device may access the conference via the signaling server. For example, the user terminal device is a VoLTE terminal device. The VoLTE terminal device may access the conference via an access network, an IP multimedia subsystem (IP Multimedia Subsystem, IMS) core network, and the signaling server.

In some possible scenarios, a participant may alternatively use a desktop cloud system, to establish a connection with the video conference system via the desktop cloud system. That is, a participant may use a virtual machine in the desktop cloud system to connect the video conference system. In this scenario, a combination of the virtual machine that is in the desktop cloud system and that is used by the participant and a terminal device used by the participant to log in to the virtual machine is used as the conference terminal.

An IMS core network device is a device in the IMS core network. The IMS core network device may include a call session control function (call session control function, CSCF) and a home subscriber server (home subscriber server, HSS). The IMS core network device may alternatively include another network element. Details are not described in this embodiment of this application. The CSCF is a call control center of the IMS core network, and implements functions such as user access, authentication, session routing, and service triggering on an IP transmission platform. The CSCF may include one or more of a serving-call session control function (serving-call session control function, S-CSCF), a proxy-CSCF (Proxy-CSCF, P-CSCF), and an interrogating-CSCF (Interrogating-CSCF, I-CSCF). The HSS is configured to record subscription data (such as user information and service data) of a user. Different user terminal devices may have a same CSCF or different CSCFs. For example, different terminal devices may have different CSCFs due to different home areas.

The signaling server is configured to: establish a call between conference terminals (for example, between a user terminal device and a user terminal device/a service agent terminal device/an expert terminal device), control various resource allocation, management, and release, and service logic inside the video conference system. The signaling server includes two functions: signaling processing and service processing. Common equivalent devices in the industry are, for example, an automatic call distributor and a telephone switching platform.

The media exchange server may be understood as a bridge connecting the conference terminal to the first conference server/second conference server. The media exchange server is configured to forward media data of a conference between the conference terminal and the conference server (the first conference server or the second conference server). In some scenarios, the media exchange server may be deployed independently. In some other scenarios, the media exchange server may be deployed together with the first conference server or the second conference server. In some embodiments, media exchange servers that provide media proxy services for different conference terminals participating in the video conference may be the same or different.

The first conference server and the second conference server correspond to different modes, and conference servers in different modes provide different conference services and have different conference functions. For example, the first conference server provides a first conference service for the conference terminal in a first mode. For example, the first conference server provides a first conference service for the conference terminal of the video conference in a second mode. The first mode may be an SFU mode, and the second mode may be an MCU mode; or the first mode is an MCU mode, and the second mode is an SFU mode. The first conference server and the second conference server may be an SFU conference server and an MCU conference server respectively. For example, the first conference server may be the SFU conference server, and the second conference server may be the MCU conference server; or the first conference server may be the MCU conference server, and the second conference server may be the SFU conference server.

In some scenarios, two conference servers included in the video conference system are the SFU conference server and the MCU conference server respectively. As shown in FIG. 5B, the video conference system may alternatively include a recording server. The recording server is configured to record and store an audio and a video generated during a video conference.

The SFU conference server is configured to: implement a function of routing and forwarding input audio and video streams of a plurality of conference terminals, for example, forward an audio and video stream of a user terminal device to a service agent terminal device or an expert terminal device, or forward an audio and video stream of a service agent terminal device or an expert terminal device to a user terminal device.

The MCU conference server is configured to: perform mixing on input audio and video streams of a plurality of conference terminals, for example, perform decoding, video mixing, and encoding on a video stream input by a user terminal device/service agent terminal device to output a processed video stream, and then send the processed video stream to a service agent terminal device/user terminal device.

In this embodiment of this application, after a conference terminal accesses a video conference, a media connection for the conference terminal may include an external media connection and an internal media connection. The external media connection is a media connection between the conference terminal and a media exchange server, and is used to transmit media data of the video conference between the conference terminal and the media exchange server. The internal media connection is a media connection between the media exchange server and a conference server, and is used to transmit media data of the video conference between the media exchange server and the conference server. On the media exchange server, the external media connection is associated with the internal media connection. It can be noted that, in different modes, different internal media connections are created for the conference terminal. It may be understood as that internal media connections are established between the media exchange server and conference servers that support different modes. For example, in the first mode, an internal media connection for the conference terminal is a media connection between the media exchange server and a conference server that supports the first mode. In the second mode, an internal media connection for the conference terminal is a media connection between the media exchange server and a conference server that supports the second mode. It can be noted that in this embodiment of this application, the "internal" mainly refers to interaction between internal network elements in the video conference system, and the "external" refers to interaction between the internal network element in the video conference system and a conference terminal.

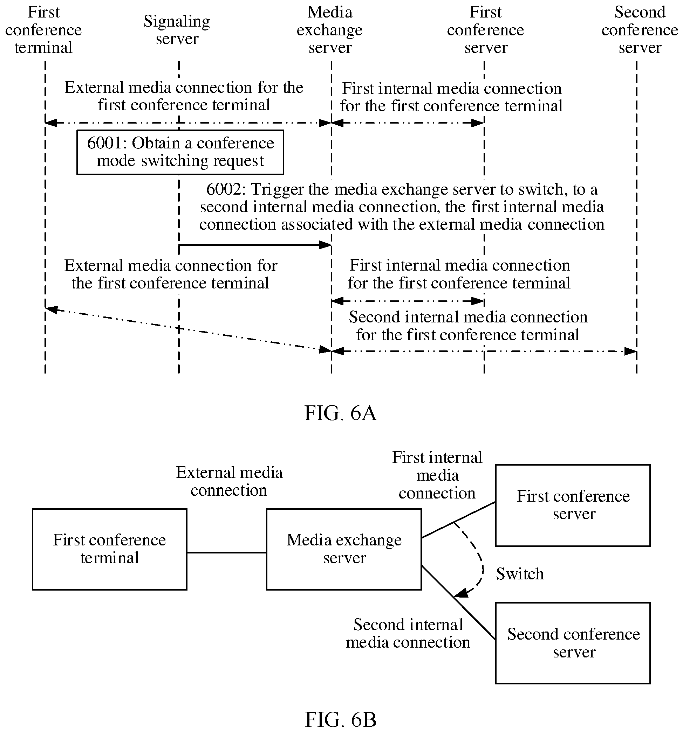

Refer to FIG. 6A. A first conference terminal is used as an example. In a case in which a conference mode needs to be switched, for example, in step 6001, a signaling server obtains a conference mode switching request. For example, in some scenarios, the conference terminal is unaware of the conference mode. When the conference terminal initiates a request, for example, requests to initiate conference recording, the signaling server determines, based on the request, that the conference recording is needed. If an original mode is an SFU mode, an MCU mode is switched to, and a conference server that provides a video conference service needs to be replaced. For another example, when the conference terminal requests to stop conference recording, the signaling server determines, based on the request, to stop the conference recording. If an original mode is an MCU mode, the MCU mode is switched to, and a conference server that provides a video conference service needs to be replaced.

Step 6002: The signaling server triggers a media exchange server to switch an internal media connection associated with an external media connection, and does not need to perform a procedure of re-accessing the conference terminal to the conference again. Refer to FIG. 6B. When a conference mode needs to be switched, only a first internal media connection associated with the external media connection needs to be switched to a second internal media connection. In FIG. 6B, the first media connection is a media connection between the media exchange server and a first conference server, and the second media connection is a media connection between the media exchange server and a second conference server.

In some embodiments, for example, the conference mode during initiation is a first mode. When a conference terminal initiates a video conference in the first mode to other conference terminals, the signaling server separately triggers creation of media connections for the conference terminals participating in the video conference. A media connection for each conference terminal includes an external media connection between the conference terminal and the media exchange server and an internal media connection between the media exchange server and the first conference server. The media connection may be understood as a media data transmission channel (or referred to as a media transmission channel for short) established between two devices. The external media connection may be understood as a media data transmission channel between the media exchange server and the conference terminal, and the first internal media connection may be understood as a media data transmission channel between the media exchange server and a first conference server device. In a possible example, media port information is allocated to both devices between which a media connection is established, and may be referred to as media endpoints for short, and the two media endpoints are used to create a media channel. For example, the media endpoint may be understood as an IP port used to establish a media connection inside the device. For example, real-time transport protocol (real-time transport protocol, RTP) media interaction is performed based on ip:port (namely, an IP address and a port). Therefore, ip:port may identify an endpoint. The media endpoint may include the IP address and the port (IP:port).

For ease of differentiation, the internal media connection between the media exchange server and the first conference server is referred to as the first internal media connection herein. The signaling server triggers the media exchange server to create an association between the external media connection and the first internal media connection. That the association is established between the external media connection and the first internal media connection means that media data of the conference is forwarded round-trip between the external media connection and the first internal connection. That an association relationship between the external media connection and the first internal media connection is established may be understood as that after receiving an audio and video stream from the external media connection, the media exchange server may route the audio and video stream to the first internal media connection based on the association relationship, or after receiving an audio and video stream from the first internal media connection, the media exchange server may route the audio and video stream to the external media connection based on the association relationship. It can be noted that different first internal media connections are created for different conference terminals, but are all created between the media exchange server and the first conference server.

When a conference terminal triggers switching from a video conference in the first mode to a second video conference, the signaling server triggers the media exchange server to switch, to the second internal media connection for each conference terminal, the first internal media connection associated with the external media connection. That the external media connection is associated with the second internal media connection means that media data of the conference is forwarded round-trip between the external media connection and the second internal connection. That the external media connection is associated with the second internal media connection may be understood as that after receiving an audio and video stream from the external media connection, the media exchange server may route the audio and video stream to the second internal media connection based on the association relationship, or after receiving an audio and video stream from the second internal media connection, the media exchange server may route the audio and video stream to the external media connection based on the association relationship. For example, that the media exchange server switches, to the second internal media connection for each conference terminal, the first internal media connection associated with the external media connection may include: The signaling server triggers the media exchange server to cancel the association relationship between the external media connection and the first internal media connection, and to associate the external media connection with the second internal media connection.

The switching of the internal media connection associated with the external media connection may be implemented in either of the following two implementations.

In a first possible implementation, for example, the conference system supports two modes, and the first mode is switched to a second mode. During mode switching, the first internal media connection created for the first mode may be reserved, and it is only necessary to trigger the media exchange server to cancel the association relationship between the external media connection and the first internal media connection, and to associate the external media connection with the second internal media connection. If the second internal media connection is not created, the second internal media connection may be first created, and the external media connection is then associated with the second internal media connection. In some embodiments, when the second mode needs to be switched to the first mode again, an association relationship between the external media connection and the second internal media connection may be directly canceled, and the external media connection is directly associated with the previously reserved first internal media connection, so that the first internal media connection does not need to be created again, thereby improving a switching speed, and avoiding affecting user experience.

In some possible embodiments, during mode switching, to improve resource utilization, when the association relationship between the external media connection and the first internal media connection is canceled, the signaling server may trigger the media exchange server and the first conference server to delete the first internal media connection, so that a resource occupied by the first internal media connection can be released, thereby improving the resource utilization.

In a second possible implementation, for example, the conference system supports two modes, and the first mode is switched to a second mode. The first internal media connection in the first mode is no longer reserved. The signaling server triggers the media exchange server to cancel the first internal media connection established between the media exchange server and the first conference server, and to establish the second internal media connection between the media exchange server and the second conference server. Therefore, during mode switching, a resource of the first internal media connection can be released in time, thereby reducing resource waste and improving resource utilization. For example, the signaling server may first trigger disconnection of the first internal media connection for each conference terminal, and then trigger creation of the second internal media connection for each conference terminal. Alternatively, the signaling server may first trigger creation of the second internal media connection for each conference terminal, and then trigger disconnection of the first internal media connection for each conference terminal. Alternatively, a procedure of establishing the second internal media connection for each conference terminal is performed in parallel with a procedure of deleting the first internal media connection for each conference terminal. For example, the signaling server may simultaneously trigger creation of the second internal media connection for each conference terminal and deletion of the first internal media connection for each conference terminal.

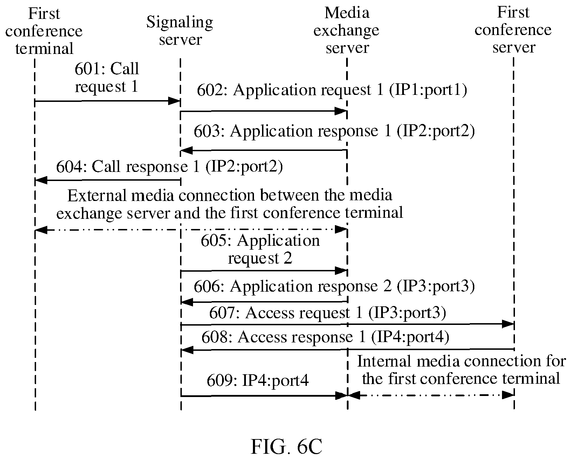

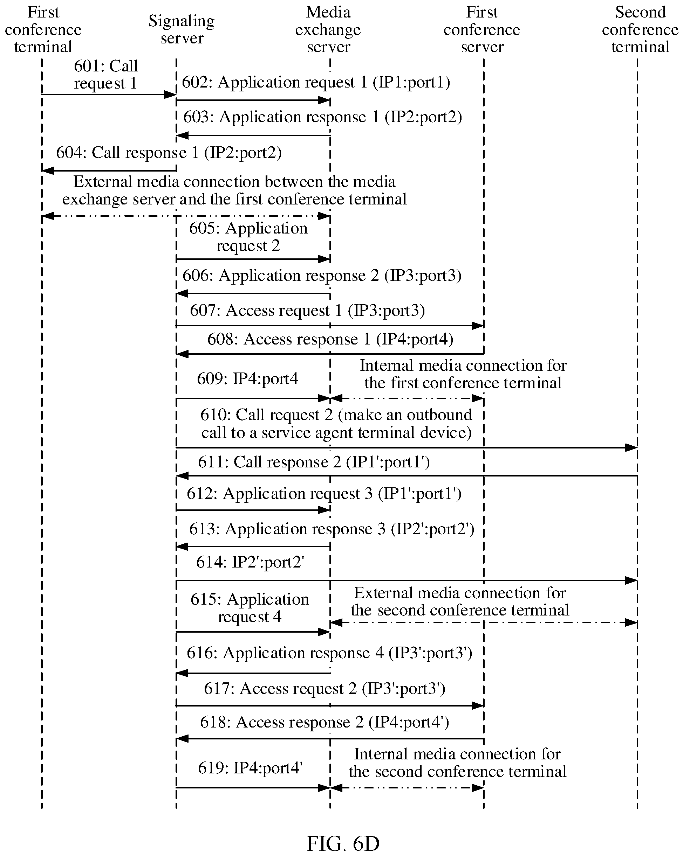

With reference to FIG. 6C and FIG. 6D, the following describes a procedure in which the first conference terminal initiates a video conference call to request to establish a video conference with a second conference terminal.

Step 601: The first conference terminal sends a first request to the signaling server, where the first request is for requesting to establish the video conference with the second conference terminal. For ease of description, the first request is referred to as a call request 1, and the call request 1 is for requesting to establish the video conference with the second conference terminal.

In some possible embodiments, the first conference terminal may initiate a video conference with a plurality of other conference terminals. In this embodiment, initiating a video conference with the second conference terminal is used as an example.

For example, the call request 1 may carry a media endpoint on the first conference terminal. The media endpoint includes an IP address of the first conference terminal, or includes an IP address and a port of the first conference terminal. For example, the IP address and the port of the first conference terminal are IP1:port1.

Step 602: When receiving the call request 1, the signaling server requests the media exchange server to allocate, to the first conference terminal, a media endpoint used to establish an external media channel with the first conference terminal. For example, a second request is sent, where the second request is for requesting the media endpoint to establish the external media channel. For ease of differentiation, the media endpoint used to establish the external media channel (connecting the conference terminal) is referred to as an external media endpoint. The external media endpoint is used to connect the conference terminal.

For ease of description, in FIG. 6C, for example, the second request that is sent to the media exchange server and that is for requesting the external media endpoint is referred to as an application request 1. The application request 1 is for requesting the media exchange server to allocate the external media endpoint to the first conference terminal.

Step 603: The media exchange server sends, to the signaling server, the external media endpoint allocated to the first conference terminal. For example, the external media endpoint on the media exchange server is IP2:port2.

In some embodiments, the media exchange server may send, to the signaling server in a second response, the external media endpoint allocated to the first conference terminal. In FIG. 6C, for example, the second response is referred to as an application response 1.

After receiving the media endpoint on the first conference terminal, the media exchange server completes creation of an external media connection on a media exchange server side based on the media endpoint on the first conference terminal and the external media endpoint allocated to the first conference terminal.

Step 604: After receiving the external media endpoint that is sent by the media exchange server and that is allocated to the first conference terminal, the signaling server sends the external media endpoint to the first conference terminal. For example, the signaling server sends a first response (referred to as a call response 1 in FIG. 6C as an example) to the first conference terminal, where the call response 1 carries the external media endpoint allocated to the first conference terminal. When receiving the call response 1, the first conference terminal completes establishment of an external media connection on a first conference terminal side based on the media endpoint IP1:port1 on the first conference terminal and the received external media endpoint IP2:port2, that is, establishes the external media connection between the media endpoint IP1:port1 and the external media endpoint IP2:port2. In FIG. 6C, for example, the external media connection for the first conference terminal is referred to as OutLink01.

Step 605: The signaling server requests the media exchange server to allocate, to the first conference terminal, a media port for creating an internal media connection. For ease of differentiation, the media endpoint used to establish the internal media channel is referred to as an internal media endpoint. The internal media endpoint is used to connect an SFU/MCU conference server.

In FIG. 6C, for example, a request that is sent to the media exchange server and that is for requesting the internal media endpoint for the first conference terminal is referred to as an application request 2. The application request 2 is for requesting the media exchange server to allocate the internal media endpoint to the first conference terminal.

Step 606: The media exchange server sends an application response 2 to the signaling server, where the application response 2 includes the internal media endpoint allocated to the first conference terminal. For example, the internal media endpoint is IP3:port3. In some embodiments, the external media endpoint and the internal media endpoint that are allocated by the media exchange server may use a same IP address but different port numbers. For example, the internal media endpoint and the external media endpoint both use IP2 or IP3 but different port numbers.

Step 607: The signaling server sends a conference access request 1 to the first conference server, where the conference access request 1 is for requesting to access the first conference terminal to the video conference. The first conference server allocates, based on the conference access request 1, a conference resource for accessing the first conference terminal to the video conference. The conference resource may include the media endpoint allocated for creating the internal media connection for the first conference terminal. In subsequent descriptions, the conference access request is referred to as an access request for short, or may use another message name. This is not specifically limited in this application. For example, the access request 1 may include the internal media endpoint allocated to the first conference terminal.

In some embodiments, when a video conference is initiated, the SFU mode may be used by default. Therefore, when receiving the call request 1 from the first conference terminal, the signaling server requests an SFU conference server to allocate, to the first conference terminal, a media endpoint used to establish an external media channel with the first conference terminal. In this embodiment, the first conference server may be the SFU conference server.

In some other embodiments, when initiating the call request 1 used to establish a video conference, the first conference terminal may preferentially determine a conference type, and different conference types correspond to different modes. For example, whether a recording function needs to be enabled is determined. When the first conference terminal initiates the video conference, and selects to enable the recording function, the call request 1 includes a recording function enabling indication. Further, the signaling server requests, based on the recording function enabling indication, an MCU conference server to allocate, to the first conference terminal, a media endpoint used to establish an external media channel with the first conference terminal. In this case, the first conference server may be the MCU server. For another example, when the first conference terminal initiates a video conference, and does not select to enable a recording function, the signaling server requests, based on a recording function enabling indication that is not carried in the call request 1, an SFU conference server to allocate, to the first conference terminal, a media endpoint used to establish an external media channel with the first conference terminal. In this case, the first conference server may be the SFU conference server.

Step 608: The first conference server sends a conference access response 1 to the signaling server, where the conference access response 1 includes a media endpoint that is on the first conference server and that is allocated to the first conference terminal. In an example, the media endpoint that is on the first conference server and that is allocated to the first conference terminal is represented as IP4:port4.

After allocating the media endpoint IP4:port4 to the first conference terminal, the first conference server may complete creation of the internal media connection based on the internal media endpoint IP3:port3 and the media endpoint IP4:port4 for the first conference terminal.

Step 609: The signaling server sends, to the media exchange server, the media endpoint IP4:port4 that is on the first conference server and that is allocated to the first conference terminal. After receiving the media endpoint IP4:port4, the media exchange server may complete creation of an internal media connection based on the internal media endpoint IP3:port3 and the media endpoint IP4:port4 for the first conference terminal. In FIG. 6A, for example, the internal media connection for the first conference terminal is referred to as InLink01.

Further, the media exchange server completes mutual association between the internal media connection InLink01 and the external media connection OutLink01 for the first conference terminal.

In a possible implementation, the media exchange server may associate, based on this indication from the signaling server, the internal media endpoint and the external media endpoint that are allocated by the media exchange server to the first conference terminal, that is, complete the association between the internal media connection for the first conference terminal and the external media connection for the first conference terminal.

Manner 1: When sending the application request 2 to the media exchange server in step 605, after indicating the media exchange server to allocate the internal media endpoint to the first conference terminal, the signaling server may establish an association relationship between the internal media endpoint and the external media endpoint that are allocated to the first conference terminal. Therefore, after completing the allocation of the external media endpoint to the first conference terminal, the media exchange server creates the association relationship between the internal media endpoint and the external media endpoint for the first conference terminal. In some embodiments, the application request 2 may carry the external media endpoint for the first conference terminal.

Further, after the establishment of the internal media connection and the external media connection for the first conference terminal is completed, the creation of the association relationship between the internal media connection and the external media connection for the first conference terminal is completed on the media exchange server because the association relationship between the internal media endpoint and the external media endpoint for the first conference terminal is created.

Manner 2: After receiving the internal media endpoint allocated by the media exchange server to the first conference terminal in step 606, the signaling server may indicate the media exchange server to establish an association relationship between the internal media endpoint allocated to the first conference terminal and the external media endpoint allocated to the first conference terminal.

Manner 3: When sending the media endpoint on the first conference server to the media exchange server in step 609, the signaling server may indicate the media exchange server to establish an association relationship between the internal media endpoint allocated to the first conference terminal and the external media endpoint allocated to the first conference terminal.

Manner 4: After completing step 609, the signaling server may indicate the media exchange server to establish an association relationship between the internal media endpoint allocated to the first conference terminal and the external media endpoint allocated to the first conference terminal.

Manner 5: After receiving the call request 1, the signaling server may apply to the media exchange server for the external media endpoint for the first conference terminal, and also apply to the media exchange server for the internal media endpoint for the first conference terminal.

In step 602, the application request 1 sent by the signaling server to the media exchange server is for requesting the media exchange server to allocate the external media endpoint to the first conference terminal, and is also for requesting the media exchange server to allocate the internal media endpoint to the first conference terminal. Further, the application response 1 fed back by the media exchange server to the signaling server in step 603 carries the internal media endpoint allocated to the first conference terminal and the external media endpoint allocated to the first conference terminal. When applying to the media exchange server for both the internal media endpoint and the external media endpoint for the first conference terminal, the signaling server may further indicate the media exchange server to associate the internal media endpoint and the external media endpoint that are allocated to the first conference terminal. For example, the application request 1 may further carry indication information 1, and the indication information 1 indicates the media exchange server to associate the internal media endpoint and the external media endpoint that are allocated to the first conference terminal. It can be noted that, when Manner 5 is used, step 605 and step 606 are no longer performed.

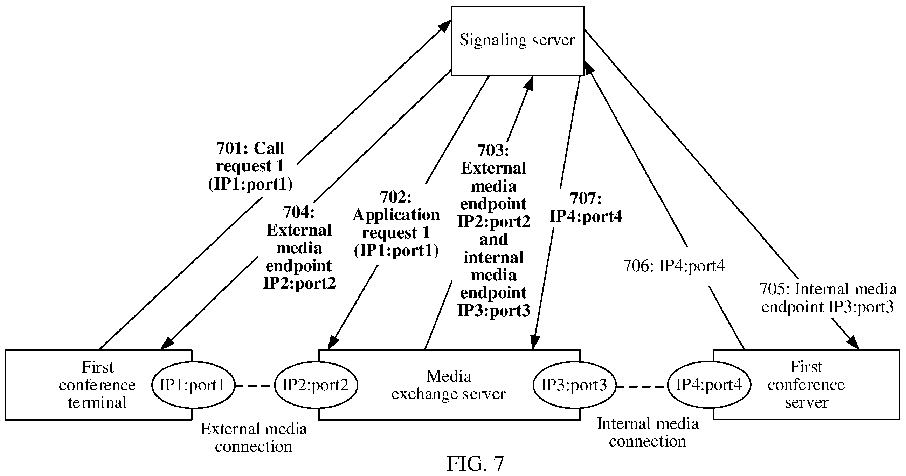

The following describes Manner 5 with reference to FIG. 7.

For step 701, refer to step 601. Details are not described herein again.

Step 702: When receiving the call request 1, the signaling server applies to the media exchange server for an internal media endpoint and an external media endpoint for the first conference terminal. For example, the signaling server sends an application request 1 to the media exchange server, for requesting the media exchange server to allocate the external media endpoint and the internal media endpoint for the first conference terminal that are associated with each other. The application request 1 carries a media endpoint IP1:port1 on the first conference terminal.

Step 703: After receiving the application request 1, the media exchange server allocates, to the first conference terminal, two media endpoints, namely, an external media endpoint IP2:port2 and an internal media endpoint IP3:port3, and sends an application response 1 to the signaling server. The request response 1 carries the external media endpoint IP2:port2 and the internal media endpoint IP3:port3. The media exchange server stores an association relationship between the external media endpoint IP2:port2 and the internal media endpoint IP3:port3.

After allocating the external media endpoint IP2:port2, the media exchange server creates an external media connection between the media endpoint IP1:port1 on the first conference terminal and the external media endpoint IP2:port2.

Step 704: After receiving the application response 1, the signaling server sends a call response 1 to the first conference terminal. The call response 1 carries the external media endpoint IP2:port2. After receiving the call response 1, the first conference terminal establishes an external media connection OutLink01, namely, the external media connection between the media endpoint IP1:port1 on the first conference terminal and the external media endpoint IP2:port2.

In step 701 to step 704, the signaling server triggers the media exchange server to establish the external media connection OutLink01 between the media endpoint IP1:port1 on the first conference terminal and the external media endpoint IP2:port2 for the first conference terminal. In some embodiments, the signaling server may store a mapping relationship between the external media endpoint IP2:port2 for the first conference terminal and an internal media endpoint IP3:port3 for the first conference terminal.

Step 705: The signaling server adds the first conference terminal to the video conference. To be specific, the signaling server sends an access request to the first conference server, where the access request carries the internal media endpoint IP3:port3 allocated by the media exchange server to the first conference terminal.

Step 706: The first conference server sends an access response to the signaling server, where the access response carries a media endpoint IP4:port4 allocated by the first conference server to the first conference terminal.

Step 707: The signaling server sends, to the media exchange server, a request for establishing an internal media connection, where the request carries the media endpoint IP4:port4 on the first conference server. Therefore, the internal media connection established by the media exchange server is InLink01.

The media connection for the first conference terminal is completed in step 601 to step 609, and includes the internal media connection and the external media connection. As shown in FIG. 6D, the following describes a procedure in which the signaling server triggers establishment of a media connection for the second conference terminal.

Step 610: The signaling server makes an outbound call to the second conference terminal, and may send a call request 2 to the second conference terminal, where the call request 2 is for requesting the second conference terminal to access the video conference.

Step 611: After receiving the call request 2, the second conference terminal sends a call response 2 to the signaling server, where the call response 2 carries a media endpoint on the second conference terminal, for example, IP 1':port 1'.

Step 612: The signaling server sends an application request 3 to the media exchange server, where the application request 3 is for requesting the media exchange server to allocate an external media endpoint to the second conference terminal. The application request 3 may carry the media endpoint IP1':port1' on the second conference terminal. After the media exchange server allocates an external media endpoint to the second conference terminal, for example, the external media endpoint allocated to the second conference terminal is IP2':port2', the media exchange server completes creation of an external media connection on a media exchange server side based on the media endpoint IP1':port1' on the second conference terminal and the external media endpoint IP2':port2' allocated to the second conference terminal. In this embodiment of this application, the media exchange server may be deployed in a cluster manner.

In some embodiments, the media exchange servers that provide services for the first conference terminal and the second conference terminal may be the same or different. For example, when the media exchange servers that provide the services for the first conference terminal and the second conference terminal are the same, the external media endpoints allocated by the media exchange server to the first conference terminal and the second conference terminal may have a same IP address and different port numbers. For example, the IP addresses of the external media endpoints allocated by the media exchange server to the first conference terminal and the second conference terminal may both be IP2, but the port numbers are different. Certainly, when a plurality of IP addresses are deployed on the media exchange server, the external media ports allocated to the first conference terminal and the second terminal have different IP addresses and different port numbers. For another example, when the media exchange servers that provide the services for the first conference terminal and the second conference terminal are the same, the internal media endpoints allocated by the media exchange server to the first conference terminal and the second conference terminal may have a same IP address and different port numbers. For example, the IP addresses of the external media endpoints allocated by the media exchange server to the first conference terminal and the second conference terminal may both be IP3, but the port numbers are different. Certainly, when a plurality of IP addresses are deployed on the media exchange server, the internal media endpoints allocated to the first conference terminal and the second terminal have different IP addresses and different port numbers.

Step 613: The media exchange server sends an application response 3 to the signaling server, where the application response 3 carries the external media endpoint IP2':port2' allocated by the media exchange server to the second conference terminal.

Step 614: The signaling server sends, to the second conference terminal, the external media endpoint IP2':port2' allocated to the second conference terminal, so that the second conference terminal completes creation of an external media connection on a second conference terminal side based on the media endpoint IP1':port1' on the second conference terminal and the external media endpoint IP2':port2'. For example, the external media connection for the second conference terminal is referred to as OutLink02.

In some embodiments, before making the outbound call to the second conference terminal, the signaling server may first request the media exchange server to allocate the external media endpoint to the second conference terminal, and when sending the call request 2 to the second conference terminal, then send, to the second conference terminal, the external media endpoint allocated to the second conference terminal.

In some other embodiments, the signaling server may then apply to the media exchange server for the media endpoint after receiving the call response 2 sent by the second conference terminal. In FIG. 6D, this manner is used as an example.

Step 615: The signaling server sends an application request 4 to the media exchange server, where the application request 4 is for requesting the media exchange server to allocate an internal media endpoint to the second conference terminal.

Step 616: After receiving the application request 4, the media exchange server allocates, to the second conference terminal, the internal media endpoint, for example, IP3':port3', and then sends an application response 4 to the signaling server, where the application response 4 includes the internal media endpoint IP3':port3' allocated by the media exchange server to the second conference terminal.

Step 617: After receiving the application response 4, the signaling server requests the first conference server to add the second conference terminal to the video conference. The signaling server sends an access request 2 to the first conference server, where the access request 2 is for requesting to add the second conference terminal to the video conference. For example, the access request 2 carries the internal media endpoint IP3':port3' allocated to the second conference terminal.

Step 618: The first conference server sends an access response 2 to the signaling server, where the access response 2 carries a media endpoint allocated by the first conference server to the second conference terminal, for example, IP4:port4'.

In the foregoing embodiment, the first conference terminal and the second conference terminal use the same first conference server. Therefore, the first conference server may allocate the same IP address ip4 to the first conference terminal and the second conference terminal, but allocate different ports. In some possible embodiments, the first conference server is deployed in a cluster manner, and the first conference terminal and the second conference terminal may use different first conference servers or a same first conference server.

Step 619: The signaling server sends the media endpoint IP4:port4' on the first conference server to the media exchange server. The media exchange server completes an internal media connection for the second conference terminal on the media exchange server side based on the media endpoint IP4:port4' on the first conference server and the internal media endpoint IP3':port3' for the second conference terminal. For example, the internal media connection for the second conference terminal is referred to as InLink02.

Further, the media exchange server completes mutual association between the internal media connection InLink02 and the external media connection OutLink02 for the second conference terminal.

Similar to an association manner of the first conference terminal, the media exchange server may associate, based on this indication from the signaling server, the internal media endpoint and the external media endpoint that are allocated by the media exchange server to the second conference terminal, that is, complete the association between the internal media connection for the second conference terminal and the external media connection for the second conference terminal.

Manner 2-1: When sending the application request 4 to the media exchange server in step 615, after indicating the media exchange server to allocate the internal media endpoint to the second conference terminal, the signaling server may establish an association relationship between the internal media endpoint and the external media endpoint that are allocated to the second conference terminal. Therefore, after completing the allocation of the external media endpoint to the second conference terminal, the media exchange server creates the association relationship between the internal media endpoint and the external media endpoint for the second conference terminal. In some embodiments, the application request 4 may carry the external media endpoint for the second conference terminal.

Further, after the establishment of the internal media connection and the external media connection for the second conference terminal is completed, the creation of the association relationship between the internal media connection and the external media connection for the second conference terminal is completed on the media exchange server because the association relationship between the internal media endpoint and the external media endpoint for the second conference terminal is created.

Manner 2-2: After receiving the internal media endpoint allocated by the media exchange server to the second conference terminal in step 616, the signaling server may indicate the media exchange server to establish an association relationship between the internal media endpoint allocated to the second conference terminal and the external media endpoint allocated to the second conference terminal.

Manner 2-3: When sending, to the media exchange server, the media endpoint allocated by the first conference server to the second conference terminal in step 619, the signaling server may indicate the media exchange server to establish an association relationship between the internal media endpoint allocated to the second conference terminal and the external media endpoint allocated to the second conference terminal.

Manner 2-4: After completing step 619, the signaling server may indicate the media exchange server to establish an association relationship between the internal media endpoint allocated to the second conference terminal and the external media endpoint allocated to the second conference terminal.

Manner 2-5: The signaling server may apply to the media exchange server for the internal media port for the first conference terminal, and also apply to the media exchange server for the external media port for the first conference terminal.

In step 612, the application request 3 sent by the signaling server to the media exchange server is for requesting the media exchange server to allocate the external media endpoint to the second conference terminal, and is also for requesting the media exchange server to allocate the internal media endpoint to the second conference terminal. Further, the application response 4 fed back by the media exchange server to the signaling server in step 613 carries the internal media endpoint allocated to the second conference terminal and the external media endpoint allocated to the second conference terminal. When applying to the media exchange server for both the internal media endpoint and the external media endpoint for the second conference terminal, the signaling server may further indicate the media exchange server to associate the internal media endpoint and the external media endpoint that are allocated to the second conference terminal. For example, the application request 3 may further carry indication information 2, and the indication information 2 indicates the media exchange server to associate the internal media endpoint and the external media endpoint that are allocated to the second conference terminal. It can be noted that, when Manner 2-5 is used, step 615 and step 616 are no longer performed.

Through the foregoing procedures shown in FIG. 6C and FIG. 6D, the creation of the media connection for the first conference terminal and the media connection for the second conference terminal is completed. Further, the first conference terminal and the second conference terminal may perform a video call through the established media connections.

In some embodiments, in a desktop cloud scenario, a participant uses a virtual machine in a desktop cloud system to connect a video conference system. When an external media connection is established between the participant and the media exchange server, an external media connection may be established between the virtual machine used by the participant and the media exchange server. During subsequent forwarding of a media stream, the virtual machine sends the media stream to a terminal that is used by the participant and that is for display or playback.

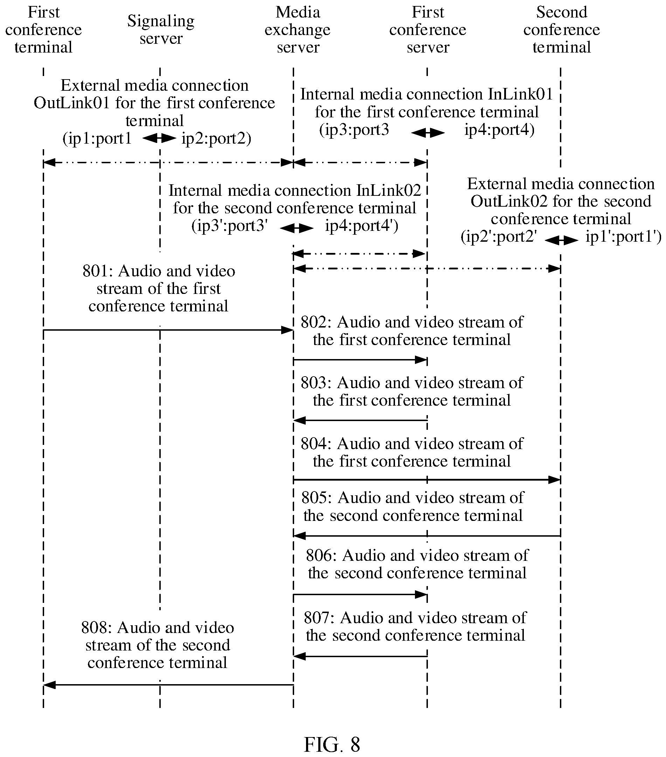

Refer to FIG. 8. A procedure of transmitting an audio and video stream is described. In FIG. 8, for example, a first conference server is an SFU conference server.

Step 801: A first conference terminal sends a generated audio and video stream to a media exchange server through an external media connection OutLink01 for the first conference terminal.

For example, the first conference terminal sends, based on an association relationship between a media endpoint ip1:port1 and an external media endpoint ip2:port2, the audio and video stream to the external media endpoint (ip2:port2) on the media exchange server for the first conference terminal through the media endpoint ip1:port1.

Step 802: The media exchange server sends the audio and video stream to the first conference server based on an association relationship between the external media connection OutLink01 and an internal media connection InLink01 for the first conference terminal.

For example, the media exchange server forwards the audio and video stream to an internal media endpoint (ip3:port3) for the first conference terminal, and sends the audio and video stream to a media endpoint (ip4:port4) on the first conference server for the first conference terminal through the internal media endpoint ip3 :port3.

Step 803: The first conference server sends, according to a forwarding rule, the audio and video stream to the media exchange server through an internal media connection for the second conference terminal. For example, the first conference server forwards the audio and video stream of the first conference terminal to the media endpoint (ip4:port4) on the first conference server for the second conference terminal according to the forwarding rule, and sends the audio and video stream to an internal media endpoint (ip3':port3') on the media exchange server for the second conference terminal through the endpoint ip4:port4.

Step 804: The media exchange server sends the audio and video stream of the first conference terminal to the second conference terminal through an external media connection for the second conference terminal.

For example, the media exchange server forwards the audio and video stream from the internal media endpoint for the second conference terminal to an external media endpoint (ip2':port2') for the second conference terminal, and then sends the audio and video stream to a media endpoint (ip1':port1') on the second conference terminal. So far, the video conference system completes the sending of the audio and video stream input by the first conference terminal to the second conference terminal.

Similarly, a principle of an implementation process of forwarding the audio and video stream input by the second conference terminal to the first conference terminal is similar to that of forwarding the audio and video stream input by the first conference terminal to the second conference terminal. For details, refer to step 805 to step 808.

Step 805: The second conference terminal sends a generated audio and video stream to the media exchange server through an external media connection OutLink02 for the second conference terminal.

For example, the second conference terminal sends the audio and video stream to the external media endpoint (ip2':port2') on the media exchange server for the second conference terminal based on an association relationship between the media endpoint ip1':port1' and the external media endpoint ip2':port2' through the media endpoint ip1':port1'.

Step 806: The media exchange server sends the audio and video stream to the first conference server based on an association relationship between the external media connection OutLink02 and an internal media connection InLink02 for the second conference terminal.

For example, the media exchange server forwards the audio and video stream to an internal media endpoint (ip3':port3') for the second conference terminal, and sends the audio and video stream to a media endpoint (ip4:port4') on a second conference server for the second conference terminal through the internal media endpoint ip3':port3'.

Step 807: The first conference server sends the audio and video stream to the media exchange server according to a forwarding rule through the internal media connection for the first conference terminal. For example, the first conference server forwards the audio and video stream of the second conference terminal to the media endpoint (ip4:port4) on the first conference server for the first conference terminal according to the forwarding rule, and sends the audio and video stream to the internal media endpoint (ip3:port3) on the media exchange server for the first conference terminal through the endpoint ip4:port4.

Step 808: The media exchange server sends the audio and video stream of the second conference terminal to the first conference terminal through the external media connection for the first conference terminal.

For example, the media exchange server forwards the audio and video stream from the internal media endpoint for the first conference terminal to the external media endpoint (ip2:port2) for the first conference terminal, and then sends the audio and video stream to the media endpoint (ip1:port1) on the first conference terminal. So far, the video conference system completes the sending of the audio and video stream input by the second conference terminal to the first conference terminal.

In some possible embodiments, after both the second conference terminal and the first conference terminal join the video conference, the signaling server may configure a mutual view attribute between participants, that is, configure the forwarding rule for the first conference server. In some embodiments, different scenarios may have different configurations. During a call between a first participant and a second participant, it may be configured that the two parties view each other. For example, during a call between a service agent and a user, it may be configured that the service agent views a user's video image, and the user views a service agent's video image. The signaling server configures, on the first conference server, the forwarding rule of the audio and video stream between the first conference terminal and the second conference terminal. Further, after generating the audio and video stream, the first conference terminal sends the audio and video stream to the first conference server, and the first conference server may forward the audio and video stream to the second conference terminal according to the forwarding rule. After generating the audio and video stream, the second conference terminal sends the audio and video stream to the first conference server, and the first conference server may forward the audio and video stream to the first conference terminal according to the forwarding rule. In some scenarios, during a call between two participants, it may be further configured that the first participant views a second participant's video image, but the second participant does not view a first participant's video image. In some scenarios, during a video conference between a plurality of parties, for example, during a video conference between a user, a service agent, and an expert, it may be configured that both the service agent and the expert view a user's video image, and the user views a service agent's video image. When three or more conference terminals join a video conference, the signaling server may configure different forwarding rules based on scenario requirements. For example, each of the three participants can view video images of other participants.

In some scenarios, after a video conference is initiated, due to an operation performed by a participant, a video conference mode needs to be replaced, for example, an SFU mode is switched to an MCU mode, or an MCU mode is switched to an SFU mode. For example, to start conference recording, video images of two or more parties need to be mixed before recording, or an original scenario with conference recording is switched to a scenario without recording. An example in which the conference mode is switched from a first mode to a second mode is used below. The first mode corresponds to the first conference server, and the second mode corresponds to the second conference server. For example, the second conference terminal initiates switching from the first mode to the second mode.

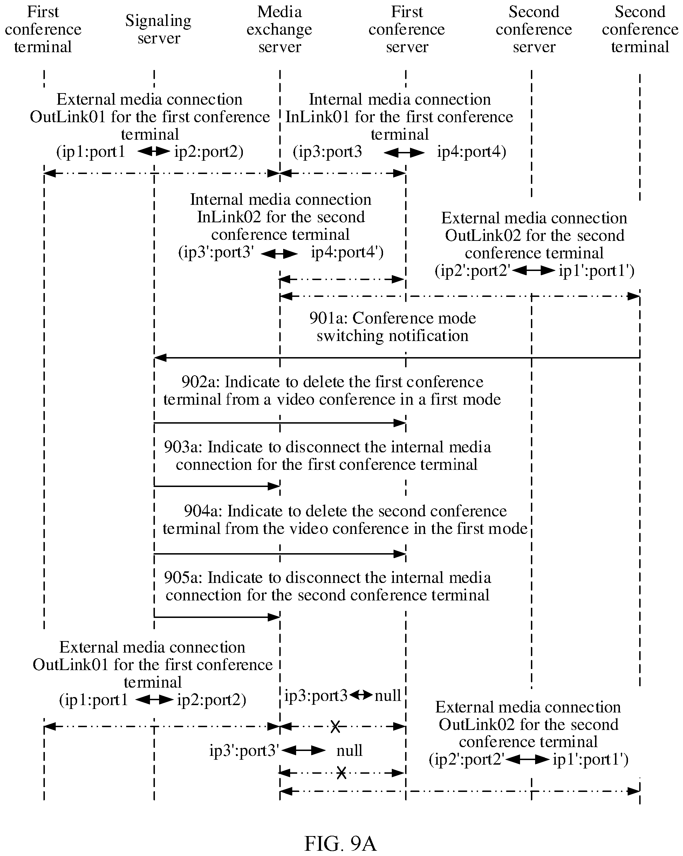

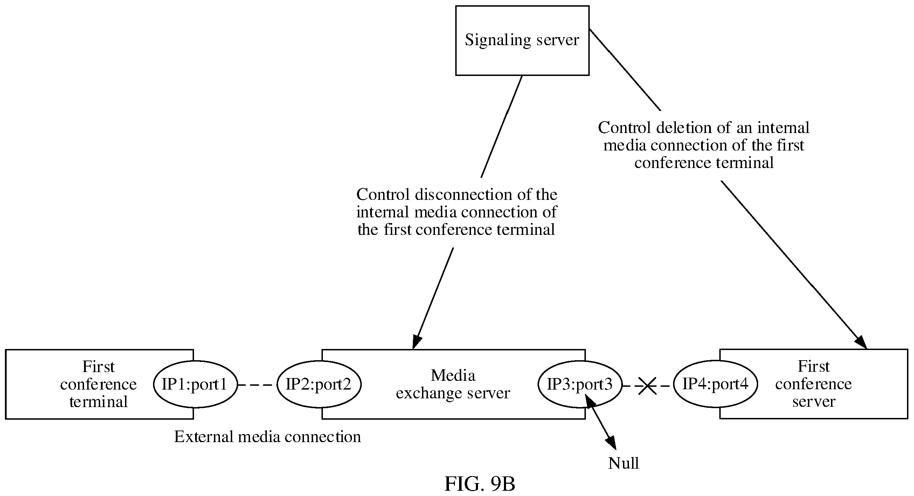

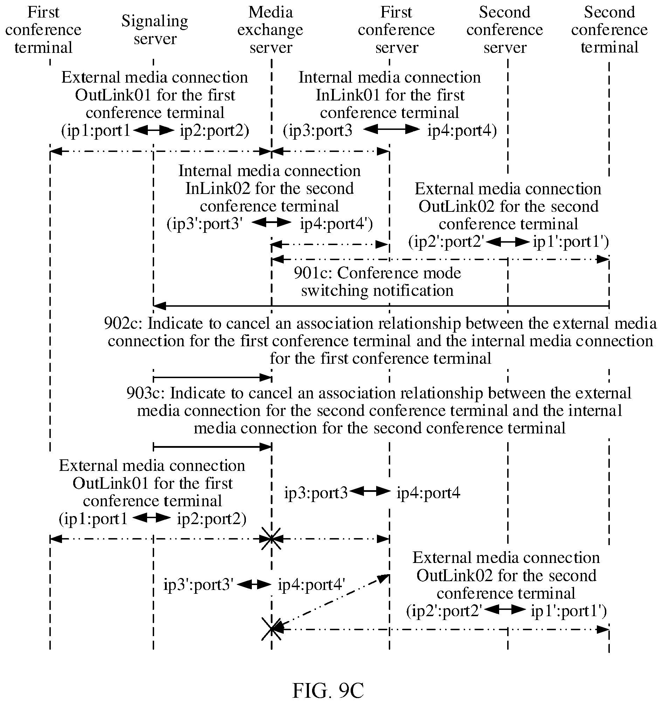

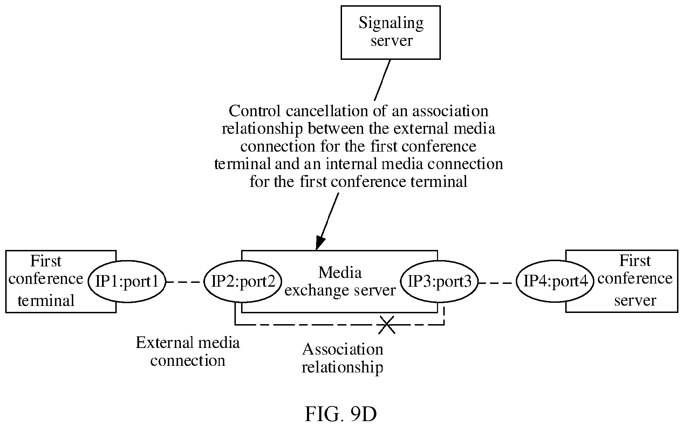

Refer to FIG. 9A to FIG. 9D. A procedure of switching a conference mode is described. FIG. 9A and FIG. 9B are described by using an example in which a second possible implementation is used when an internal media connection associated with an external media connection is switched. FIG. 9C and FIG. 9D are described by using an example in which a first possible implementation is used when the internal media connection associated with the external media connection is switched.

Step 901a: A second conference terminal sends a conference mode switching request to a signaling server, where the conference mode switching request indicates to switch a conference mode from a first mode to a second mode.

In some scenarios, the conference terminal is unaware of the conference mode. When the conference terminal initiates a request, for example, requests to initiate conference recording, the signaling server determines, based on this notification, that conference recording is needed. If an original mode is an SFU mode, an MCU mode is switched to, and a conference server that provides a video conference service needs to be replaced. For another example, when the conference terminal requests to stop conference recording, the signaling server determines, based on the request, to stop the conference recording. If an original mode is an MCU mode, the MCU mode is switched to, and a conference server that provides a video conference service needs to be replaced.

Step 902a: The signaling server indicates a first conference server to delete a first conference terminal from a video conference in the first mode. The first conference server may release, based on the indication of the signaling server, a media endpoint allocated to the first conference terminal. For example, if the media endpoint allocated to the first conference terminal is ip4:port4, the first conference server releases the media endpoint ip4:port4 allocated to the first conference terminal. The first conference server may further delete an internal media connection that is for the first conference terminal and that is created on a first conference server side.

After receiving the conference mode switching request, the signaling server may trigger a media exchange server to disconnect the internal media connection between the media exchange server and the first conference server, and to create an internal media connection with the second conference server.

Step 903a: The signaling server indicates the media exchange server to disconnect the internal media connection for the first conference terminal. The media exchange server may disconnect the internal media connection for the first conference terminal based on the indication of the signaling server. For example, the internal media connection for the first conference terminal is a media connection between an internal media endpoint ip3:port3 allocated to the first conference terminal and a media endpoint ip4:port4 on the first conference server, and the media exchange server may delete the stored media endpoint ip4:port4 on the first conference server. That is, as shown in FIG. 9B, the media exchange server modifies, to null, the media endpoint to which the internal media endpoint ip3:port3 allocated to the first conference terminal points, to complete the disconnection of the internal media connection for the first conference terminal.

Step 904a: The signaling server indicates the first conference server to delete the second conference terminal from the video conference in the first mode. The first conference server may release, based on the indication of the signaling server, a media endpoint allocated to the second conference terminal. For example, if the media endpoint allocated to the second conference terminal is ip4:port4', the first conference server releases the media endpoint ip4:port4' allocated to the first conference terminal. The first conference server may further delete an internal media connection that is for the second conference terminal and that is created on the first conference server side.

Step 905a: The signaling server indicates the media exchange server to delete the internal media connection for the second conference terminal. The media exchange server may delete the internal media connection for the second conference terminal based on the indication of the signaling server. For example, the internal media connection for the second conference terminal is a media connection between an internal media endpoint ip3':port3' allocated to the second conference terminal and a media endpoint ip4:port4' on the first conference server, and the media exchange server may delete the stored media endpoint ip4:port4' on the first conference server. That is, the media exchange server modifies, to null, the media endpoint pointed to which the internal media endpoint ip3':port3' allocated to the second conference terminal.

In some possible embodiments, steps 902a and 903a may be performed in parallel with steps 904a and 905a. An execution sequence is not limited in this embodiment of this application.

Through steps 901a to 905a, the signaling server completes the deletion of the two conference terminals from the video conference in the first mode. It can be noted that if three or more conference terminals are needed to participate in the video conference, the signaling server deletes the plurality of conference terminals from the video conference in the first mode.

In a possible example, after deleting the two conference terminals from the video conference in the first mode, the signaling server may further control the first conference server to release conference resources allocated to the first conference terminal and the second conference terminal. In some possible manners, when indicating the first conference server to delete the internal media connections for the first conference terminal and the second conference terminal, the signaling server may indicate the first conference server to release the conference resources allocated to the first conference terminal and the second conference terminal.

In the foregoing procedure, due to existence of the media exchange server, when the signaling server deletes the conference terminals from the video conference in the first mode, only the internal media connections between the media exchange server and the first conference server are released, and the external media connections between the media exchange server and the conference terminal continue to be maintained. It may be considered that a call between the conference terminals is not disconnected. In addition, during the mode switching, the resources of the internal media connections in the first mode are released in time. This can reduce resource waste and improve resource utilization.

Refer to FIG. 9C.

For step 901c, refer to step 901a. Details are not described herein again.

Step 902c: The signaling server indicates a media exchange server to cancel an association relationship between an external media connection for a first conference terminal and an internal media connection for the first conference terminal. The media exchange server may cancel the association relationship between the external media connection and the internal media connection for the first conference terminal based on the indication of the signaling server. For example, the association relationship between the external media connection for the first conference terminal and the first internal media connection includes an association relationship between a first internal media endpoint ip3:port3 and an external media endpoint ip2:port2 that are allocated to the first conference terminal. As shown in FIG. 9D, the media exchange server may delete the association relationship between the first internal media endpoint ip3:port3 and the external media endpoint ip2:port2.

Step 903c: The signaling server indicates the media exchange server to cancel an association relationship between an external media connection for a second conference terminal and a first internal media connection for the second conference terminal. The media exchange server may cancel the association relationship between the external media connection for the second conference terminal and the first internal media connection for the second conference terminal based on the indication of the signaling server. For example, the association relationship between the external media connection for the second conference terminal and the first internal media connection for the second conference terminal includes an association relationship between an internal media endpoint ip3':port3' and an external media endpoint ip2':port2' that are allocated to the first conference terminal. The media exchange server may delete the association relationship between the internal media endpoint ip3':port3' and the external media endpoint ip2':port2'.

Through step 901c to step 903c, the signaling server completes the deletion of the two conference terminals from the video conference in the first mode. It can be noted that if three or more conference terminals are needed to participate in the video conference, the signaling server deletes the plurality of conference terminals from the video conference in the first mode.

In the foregoing procedure, due to existence of the media exchange server, when the signaling server deletes the conference terminals from the video conference in the first mode, only the association relationship between the internal media connection and the external media connection for each conference terminal is canceled, and the external media connection between the media exchange server and the conference terminal continue to be maintained. It may be considered that a call between the conference terminals is not disconnected.

With reference to FIG. 10A-1 and FIG. 10A-2, in a scenario in which a first mode is switched to a second mode, the following describes a procedure of creating a video conference in the second mode by using an example in which a second possible implementation is used when an internal media connection associated with an external media connection is switched. It can be learned from FIG. 9A and FIG. 9B that before the video conference in the second mode is created, the signaling server maintains the external media connection between the conference terminal and the media exchange server via the media exchange server. Further, that the signaling server adds the first conference terminal and the second conference terminal to the video conference in the second mode may be understood as establishing an association between the internal media endpoint allocated to the first conference terminal and the second conference server and an association between the internal media endpoint allocated to the second conference terminal and the second conference server.

Step 1001a: The signaling server sends an external media endpoint for the first conference terminal to the second conference server. For example, the signaling server sends an access request 3 to the second conference server, where the access request 3 includes the external media endpoint ip3:port3 for the first conference terminal. The access request 3 is for requesting the second conference server to add the first conference terminal to the video conference in the second mode. In some embodiments, after receiving the access request 3, the second conference server allocates, to the first conference terminal, a media endpoint, for example, ip5:port5. In an example, when being an MCU conference server, the second conference server further allocates a channel encoder and a channel decoder to the first conference terminal.

Step 1002a: The second conference server sends, to the signaling server, the media endpoint ip5:port5 allocated by the second conference server to the first conference terminal. The second conference server may complete creation of an internal media connection for the second conference terminal based on the media endpoint ip5:port5 allocated to the first conference terminal and the external media endpoint ip3:port3 for the first conference terminal.

For example, the second conference server sends an access response 3 to the signaling server, where the access response 3 includes the media endpoint ip5:port5 allocated to the first conference terminal.

Step 1003a: The signaling server sends the media endpoint ip5:port5 on the second conference server to the media exchange server. The media exchange server completes creation of an internal media connection for the first conference terminal based on the media endpoint ip5:port5 on the second conference server and the internal media endpoint ip3 :port3 for the first conference terminal. It may be understood that the media exchange server establishes an association relationship between the internal media endpoint ip3 :port3 for the first conference terminal and the media endpoint ip5:port5 on the second conference server, that is, updates, from null to ip5:port5, the media endpoint to which ip3:port3 points.

Step 1004a: The signaling server sends an external media endpoint for the second conference terminal to the second conference server. For example, the signaling server sends an access request 4 to the second conference server, where the access request 4 includes the external media endpoint ip3':port3' for the second conference terminal. The access request 4 is for requesting the second conference server to add the second conference terminal to the video conference in the second mode. In some embodiments, after receiving the access request 4, the second conference server allocates, to the second conference terminal, a media endpoint, for example, ip5:port5'. In an example, when being an MCU conference server, the second conference server further allocates a channel encoder and a channel decoder to the second conference terminal.

Step 1005a: The second conference server sends, to the signaling server, the media endpoint ip5:port5' allocated by the second conference server to the second conference terminal. The second conference server may complete creation of an internal media connection for the first conference terminal based on the media endpoint ip5:port5' allocated to the second conference terminal and the internal media endpoint ip3':port3' for the second conference terminal. For example, the second conference server sends an access response 4 to the signaling server, where the access response 4 includes the media endpoint ip5:port5' allocated to the first conference terminal.

Step 1006a: The signaling server sends the media endpoint ip5:port5' on the second conference server to the media exchange server. The media exchange server completes the creation of the internal media connection for the second conference terminal based on the media endpoint ip5:port5' on the second conference server and the internal media endpoint ip3':port3' for the second conference terminal. It may be understood that the media exchange server establishes an association relationship between the internal media endpoint ip3':port3' for the second conference terminal and the media endpoint ip5:port5' on the second conference server, that is, updates, from null to ip5:port5, the media endpoint to which ip3':port3' points.

In some possible embodiments, steps 1002a and 1003a may be performed in parallel with steps 1004a and 1005a. An execution sequence is not limited in this embodiment of this application.

Through steps 1001a to 1005a, the signaling server completes a procedure of adding the two conference terminals to the video conference in the first mode. It can be noted that if three or more conference terminals are needed to participate in the video conference, the signaling server performs a procedure of adding the plurality of conference terminals to the video conference in the second mode.

With reference to FIG. 10B-1 and FIG. 10B-2, in a scenario in which a first mode is switched to a second mode, the following describes a procedure of creating a video conference in the second mode by using an example in which a first possible implementation is used when an internal media connection associated with an external media connection is switched.

Step 1001b: The signaling server sends an application request 11 to the media exchange server, where the application request 11 is for requesting to allocate an internal media endpoint in the second mode to the first conference terminal.

Step 1002b: After receiving the application request 11, the media exchange server allocates the internal media endpoint IP33:port33 in the second mode to the first conference terminal, and sends an application response 11 to the signaling server. The request response 11 carries the internal media endpoint IP33:port33. The media exchange server stores an association relationship between the external media endpoint IP2:port2 and the internal media endpoint IP33:port33.

Step 1003b: The signaling server adds the first conference terminal to the video conference. To be specific, the signaling server sends an access request 5 to the second conference server, where the access request 5 carries the internal media endpoint IP33 :port33 allocated by the media exchange server to the first conference terminal.

Step 1004b: The second conference server sends an access response 5 to the signaling server, where the access response 5 carries a media endpoint IP44:port44 allocated by the second conference server to the first conference terminal.

Step 1005b: The signaling server sends, to the media exchange server, a request for establishing an internal media connection, where the request carries the media endpoint IP44:port44 on the second conference server. In this way, the media exchange server establishes the internal media connection in the second mode.

Step 1006b: The signaling server sends an application request 22 to the media exchange server, where the application request 22 is for requesting to allocate an internal media endpoint in the second mode to the second conference terminal.

Step 1007b: After receiving the application request 22, the media exchange server allocates the internal media endpoint IP33':port33' in the second mode to the second conference terminal, and sends an application response 22 to the signaling server. The application response 22 carries the internal media endpoint IP33':port33'. The media exchange server stores an association relationship between the external media endpoint IP2':port2' and the internal media endpoint IP33':port33'.

Step 1008b: The signaling server adds the second conference terminal to the video conference. To be specific, the signaling server sends an access request 6 to the second conference server, where the access request 6 carries the internal media endpoint IP33':port33' allocated by the media exchange server to the second conference terminal.

Step 1009b: The second conference server sends an access response 6 to the signaling server, where the access response 5 carries a media endpoint IP44:port44' allocated by the second conference server to the second conference terminal.

Step 1010b: The signaling server sends, to the media exchange server, a request for establishing an internal media connection, where the request carries the media endpoint IP44:port44' on the second conference server. In this way, the media exchange server establishes the internal media connection in the second mode.

It can be learned from the foregoing procedure that when the conference mode is switched, the internal media connection before the switching is reserved. When the conference mode needs to be switched back to the original conference mode subsequently, the internal media connection in the mode does not need to be re-established, and only the internal media connection in the mode needs to be associated with the external media connection on the media exchange server. This can improve a switching speed, and avoid affecting user experience.

Refer to FIG. 11A. On the basis of adding the second conference server shown in FIG. 10A-1 and FIG. 10A-2, a procedure of transmitting an audio and video stream is described. In FIG. 11A, for example, a second conference server is an MCU conference server.

For step 1101, refer to step 801. Details are not described herein again.

Step 1102: The media exchange server sends the audio and video stream of the first conference terminal to the second conference server based on an association relationship between an external media endpoint ip3:port3 for the first conference terminal and a media endpoint ip5:port5 on the second conference server.

For example, the media exchange server forwards the audio and video stream to the internal media endpoint (ip3:port3) for the first conference terminal, and sends the audio and video stream to a media endpoint (ip5:port5) on the second conference server for the first conference terminal through the internal media endpoint ip3 :port3.

Step 1103: The second conference terminal sends a generated audio and video stream to the media exchange server through an external media connection for the second conference terminal.

For example, the second conference terminal sends the audio and video stream to the external media endpoint (ip2':port2') on the media exchange server for the second conference terminal based on an association relationship between the media endpoint ip1':port1' and the external media endpoint ip2':port2' through the media endpoint ip1':port1'.

Step 1104: The media exchange server sends the audio and video stream of the second conference terminal to the second conference server based on an association relationship between an external media endpoint ip3':port3' for the second conference terminal and a media endpoint ip5:port5' on the second conference server.

For example, the media exchange server forwards the audio and video stream to the internal media endpoint (ip3':port3') for the second conference terminal, and sends the audio and video stream to the media endpoint (ip5:port5') on the second conference server for the first conference terminal through the internal media endpoint ip3':port3'.

Step 1105: The second conference server decodes the audio and video stream of the first conference terminal and the audio and video stream of the second conference terminal, then performs audio mixing and video mixing on decoded audio and video data of the first conference terminal and decoded audio and video data of the second conference terminal, and then encodes the audio and video data obtained through audio mixing and video mixing, to obtain an encoded audio and video stream.

In some embodiments, the second conference server decodes a video stream of the first conference terminal by using a channel decoder allocated to the first conference terminal. The second conference server decodes a video stream of the second conference terminal by using a channel decoder allocated to the second conference terminal.

In some other embodiments, the second conference server encodes, by using a channel encoder allocated to the first conference terminal, the audio and video data obtained through audio mixing and video mixing. The second conference server encodes, by using a channel encoder allocated to the second conference terminal, the audio and video data obtained through audio mixing and video mixing, to obtain an encoded audio and video stream 2 to be sent to the second conference terminal.

Step 1106: The second conference server sends an encoded audio and video stream 1 to the media exchange server through an internal media connection for the first conference terminal. For example, the second conference server forwards the encoded audio and video stream 1 to the media endpoint (ip5:port5) on the second conference server for the first conference terminal, and sends the encoded audio and video stream 1 to the internal media endpoint (ip3:port3) on the media exchange server for the first conference terminal through the endpoint ip5:port5.

Step 1107: The media exchange server sends the encoded audio and video stream 1 to the first conference terminal through an external media connection for the first conference terminal.

For example, the media exchange server forwards the encoded audio and video stream 1 to an external media endpoint (ip2:port2) for the first conference terminal, and then sends the encoded audio and video stream 1 to a media endpoint (ip1:port1) on the first conference terminal. Further, a first participant may view, via the first conference terminal, a video image obtained by mixing a first participant's video image and a second participant's video image, and hear mixed voice.

Step 1108: The second conference server sends the encoded audio and video stream 2 to the media exchange server through an internal media connection for the second conference terminal. For example, the second conference server forwards the encoded audio and video stream 2 to the media endpoint (ip5:port5') on the second conference server for the second conference terminal, and sends the encoded audio and video stream 2 to the internal media endpoint (ip3':port3') on the media exchange server for the second conference terminal through the endpoint ip5:port5'.

Step 1109: The media exchange server sends the encoded audio and video stream 2 to the second conference terminal through an external media connection for the second conference terminal.

For example, the media exchange server forwards the encoded audio and video stream 2 to the external media endpoint (ip2':port2') for the second conference terminal, and then sends the encoded audio and video stream 2 to the media endpoint (ip1':port1') on the second conference terminal. Further, a first participant may view, via the first conference terminal, a video image obtained by mixing a first participant's video image and a second participant's video image, and hear mixed voice.

In an example, in a scenario in which the second conference terminal triggers conference recording, that is, triggers switching of a conference mode from an SFU mode to an MCU mode, after completing addition of the first conference terminal and the second conference terminal to a video conference in the MCU mode, the signaling server controls allocation of a recording server for recording the video conference. For example, if the recording server is deployed in a cluster manner, the signaling server controls selection, from a recording server cluster, of a recording server for recording the video conference. For example, refer to FIG. 11B-1 and FIG. 11B-2. Before step 1101, in step 1110, the signaling server sends indication information 3 to the second conference server, where the indication information 3 indicates the second conference server to start conference recording. Step 1111: The second conference server allocates a recording encoder to the video conference. Further, after step 1104 is performed, and audio mixing and video mixing is performed on the decoded audio and video data of the first conference terminal and the decoded audio and video data of the second conference terminal, the second conference server further performs the following steps.

Step 1112: The second conference server encodes the audio and video data obtained through audio mixing and video mixing, to obtain an encoded audio and video stream 3.

Step 1113: The second conference server sends the encoded audio and video stream 3 to the recording server. The recording server decodes the encoded audio and video stream 3 in a recorded file format, and writes the decoded audio and video stream 3 into a video file.

In a possible scenario, during a video conference, another participant may alternatively be invited to access the video conference. For example, in a call center system, during a video call between a user and a service agent, the service agent determines, based on call content, that assistance of a service expert is needed, and initiates, via a service agent terminal device, a procedure of inviting the expert to access a video conference.

In an example, in a video conference in a second mode between a first conference terminal and a second conference terminal, the second conference terminal invites a third participant to join the video conference. Refer to FIG. 12.

Step 1201: The second conference terminal notifies a signaling server to call a third conference terminal to join the video conference. For example, the second conference terminal sends a notification message to the signaling server, where the notification message indicates the signaling server to call the third conference terminal to join the video conference.

Step 1202: After receiving the notification message, the signaling server sends a call request 3 to the third conference terminal, where the call request 3 is for requesting the third conference terminal to access the video conference.

Step 1203: After receiving the call request 3, the third conference terminal sends a call response 3 to the signaling server, where the call response 3 carries a media endpoint on the third conference terminal, for example, IP1":port1".

Step 1204: The signaling server sends an application request 5 to a media exchange server, where the application request 5 is for requesting the media exchange server to allocate an external media endpoint to the third conference terminal. The application request 5 may carry the media endpoint IP1":port1" on the third conference terminal. After the media exchange server allocates the external media endpoint to the third conference terminal, for example, the external media endpoint allocated to the third conference terminal is IP2":port2", the media exchange server completes creation of an external media connection on a media exchange server side based on the media endpoint IP1":port1" on the third conference terminal and the external media endpoint IP2":port2" allocated to the third conference terminal.

Step 1205: The media exchange server sends an application response 5 to the signaling server, where the application response 5 carries the external media endpoint IP2":port2" allocated by the media exchange server to the third conference terminal.

Step 1206: The signaling server sends, to the third conference terminal, the external media endpoint IP2":port2" allocated to the third conference terminal, so that the third conference terminal completes creation of an external media connection on a third conference terminal side based on the media endpoint IP1":port1" on the third conference terminal and the external media endpoint IP2":port2". For example, the external media connection for the third conference terminal is referred to as OutLink03.

In some embodiments, before making the outbound call to the third conference terminal, the signaling server may first request the media exchange server to allocate the external media endpoint to the third conference terminal, and when sending the call request 3 to the third conference terminal, then send, to the third conference terminal, the external media endpoint allocated to the third conference terminal.

In some other embodiments, the signaling server may then apply to the media exchange server for the media endpoint after receiving the call response 3 sent by the third conference terminal.

In FIG. 12, this manner is used as an example.

Step 1207: The signaling server sends an application request 6 to a media exchange server, where the application request 6 is for requesting the media exchange server to allocate an internal media endpoint to the third conference terminal.

Step 1208: After receiving the application request 6, the media exchange server allocates, to the third conference terminal, the internal media endpoint, for example, IP3":port3", and then sends an application response 6 to the signaling server, where the application response 6 includes the internal media endpoint IP3":port3" allocated by the media exchange server to the third conference terminal.

Step 1209: After receiving the application response 6, the signaling server requests the second conference server to add the third conference terminal to the video conference. The signaling server sends an access request 7 to the second conference server, where the access request 7 is for requesting to add the third conference terminal to the video conference. For example, the access request 7 carries the internal media endpoint IP3":port3" allocated to the third conference terminal.

Step 1210: The second conference server sends an access response 7 to the signaling server, where the access response 7 carries a media endpoint allocated by the second conference server to the third conference terminal, for example, IP5:port5".

Step 1211: The signaling server sends, to the media access server, the media endpoint IP5:port5" allocated by the second conference server to the third conference terminal.

It may be understood that, to implement functions in the foregoing method embodiments, the signaling server, the conference terminal (for example, the first conference terminal or the second conference terminal), and the conference server (for example, the first conference server or the second conference server) include a corresponding hardware structure and/or software module for performing the functions. A person skilled in the art should be easily aware that, in combination with units and method steps in the examples described in embodiments disclosed in this application, this application can be implemented by hardware or a combination of hardware and computer software. Whether a function is performed by hardware or hardware driven by computer software depends on particular application scenarios and design constraint conditions of the technical solutions.

FIG. 13 is a schematic block diagram of a communication apparatus 1300 according to an embodiment of this application. The communication apparatus 1300 includes a processing module 1310 and a transceiver module 1320.

In a possible scenario, the communication apparatus 1300 may be used in a signaling server or a chip in a signaling server, and is configured to implement the method performed by the signaling server in any one of the foregoing embodiments.

The transceiver module 1320 is configured to obtain a conference mode switching request.

The processing module 1310 is configured to trigger, based on the conference mode switching request, a media exchange server to switch, to a second internal media connection, a first internal media connection associated with an external media connection. The external media connection is used to transmit media data of the video conference between a first conference terminal and the media exchange server. The first conference terminal is any conference terminal participating in the conference. The first internal media connection is used to transmit media data of the video conference between the media exchange server and a first conference server. The second internal media connection is used to transmit media data of the video conference between the media exchange server and a second conference server.

In some embodiments, when triggering the media exchange server to switch, to the second internal media connection, the first internal media connection associated with the external media connection, the processing module 1310 is specifically configured to trigger the media exchange server to cancel an association relationship between the external media connection and the first internal media connection, and to associate the external media connection with the second internal media connection.

In some embodiments, the processing module 1310 is further configured to trigger the media exchange server to delete the first internal media connection.

In some embodiments, the processing module 1310 triggers the media exchange server to disconnect the first internal media connection established between the media exchange server and the first conference server, and to establish the second internal media connection between the media exchange server and the second conference server.

In some embodiments, the processing module 1310 is further configured to: when the first conference terminal joins the video conference, trigger, by using the transceiver module 1320, the media exchange server to create the external media connection with the first conference terminal, trigger the media exchange server to create the first internal media connection with the first conference server, and trigger the media exchange server to associate the external media connection with the first internal media connection.

In some embodiments, the processing module 1310 is further configured to: after the conference mode switching request is obtained, trigger, by using the transceiver module 1320, the media exchange server to create the second internal media connection with the second conference server.

In some embodiments, the transceiver module 1320 is further configured to: receive a first request from the first conference terminal, where the first request includes media port information on the first conference terminal; send a second request to the media exchange server, where the second request is for requesting to establish media port information for the external media connection, and the second request carries the media port information on the first conference terminal; receive a second response sent by the media exchange server, where the second response carries first media port information on the media exchange server, and the first media port information on the media exchange device is used to create the external media connection for the first conference terminal; and send a first response to the first conference terminal, where the first response carries the first media port information on the media exchange server.

In some embodiments, the transceiver module 1320 receives the second response that is sent by the media exchange server and that further carries second media port information on the media exchange server, and the second media port information on the media exchange device is used to create the first internal media connection for the first conference terminal. The transceiver module 1320 is further configured to: send a conference access request to the first conference server, where the conference access request is for requesting the first conference terminal to connect the first conference server, and the conference access request carries the second media port information on the media exchange server; send a conference access response to the first conference server, where the conference access response carries media port information on the first conference server; and send the media port information on the first conference server to the media exchange server.

In some embodiments, the transceiver module 1320 is further configured to: receive a first request from a second conference terminal, where the first request is for requesting the first conference terminal to access the video conference; send a second request to the media exchange server, where the second request is for requesting to establish first media port information for the external media connection; and receive a second response sent by the media exchange server, where the second response carries first media port information on the media exchange server.

In some embodiments, the second request is further for requesting to establish second media port information for the first internal media connection, and the second response further carries second media port information on the media exchange server. The transceiver module 1320 is further configured to: send a first conference access request to the first conference server, where the first conference access request is for requesting the first conference terminal to connect the first conference server, and the first conference access request carries the second media port information on the media exchange server; receive a first conference access response sent by the first conference server, where the first conference access response carries media port information on the first conference server; and send the media port information on the first conference server to the media exchange server.

In some embodiments, the transceiver module 1320 is further configured to send a first association request to the media exchange server, where the first association request indicates the media exchange server to establish an association relationship between the first media port information and the second media port information.

In some embodiments, the second request sent by the transceiver module 1320 to the media exchange server further indicates the media exchange server to establish an association relationship between the first media port information and the second media port information.

In some embodiments, the transceiver module 1320 is further configured to send a disassociation request to the media exchange server, where the disassociation request indicates the media exchange server to cancel the association relationship between the first media port information and the second media port information.

In some embodiments, when triggering the media exchange server to create the second internal media connection with the second conference server, the transceiver module 1320 is further configured to: send a third request to the media exchange server, where the third request is for requesting to establish third media port information for the second internal media connection; receive a third response sent by the media exchange server, where the third response carries the third media port information; send a second conference access request to the second conference server, where the second conference access request is for requesting the first conference terminal to connect the second conference server, and the second conference access request carries the third media port information; receive a second conference access response sent by the second conference server, where the second conference access response carries media port information on the second conference server; and send the media port information on the second conference server to the media exchange server.

In some embodiments, when triggering the media exchange server to associate the external media connection with the second internal media connection, the transceiver module 1320 is further configured to send a second association request to the media exchange server, where the second association request indicates the media exchange server to establish an association relationship between the first media port information and the third media port information.

In some embodiments, the processing module 1310 triggers the media exchange server to delete the media port information on the first conference server.

In some embodiments, the transceiver module 1320 sends a second conference access request to the second conference server, where the second conference request is for requesting the first conference terminal to connect the second conference server, and the second conference access request carries the first media port information; receives a second conference access response sent by the second conference server, where the second conference access response carries media port information on the second conference server; and sends the media port information on the second conference server to the media exchange server.

In some embodiments, after obtaining the conference mode switching request, the transceiver module 1320 is further configured to separately indicate the first conference server and the media exchange server to delete the first internal media connection.

In some embodiments, when obtaining the conference mode switching request, the transceiver module 1320 is specifically configured to receive the conference mode switching request sent by a third conference terminal. The third conference terminal is a conference terminal that is in conference terminals participating in the conference and that supports enabling of a conference recording service.

In some embodiments, the conference terminals participating in the conference include at least two user terminal devices, or include a user terminal device and a service agent terminal device, or include a user terminal device, a service agent terminal device, the user terminal device, the service agent terminal device, and an expert terminal device.

In another possible scenario, the communication apparatus 1300 may be used in a media exchange server or a chip in a media exchange server, and is configured to implement the method performed by the media exchange server in any one of the foregoing embodiments.

The transceiver module 1320 receives a trigger instruction from a signaling server. The processing module 1310 switches, to a second internal media connection based on the trigger instruction, a first internal media connection associated with an external media connection. The external media connection is used to transmit media data of a video conference between a first conference terminal and the media exchange server. The first conference terminal is any conference terminal participating in the conference. The first internal media connection is used to transmit media data of the video conference between the media exchange server and a first conference server. The second internal media connection is used to transmit media data of the video conference between the media exchange server and a second conference server.

In some embodiments, the processing module 1310 is specifically configured to: cancel an association relationship between the external media connection and the first internal media connection, and associate the external media connection with the second internal media connection.

In some embodiments, the processing module 1310 deletes the first internal media connection.

In some embodiments, the processing module 1310 is specifically configured to: disconnect the first internal media connection established between the media exchange server and the first conference server, and establish the second internal media connection between the media exchange server and the second conference server.

In some embodiments, the processing module 1310 is further configured to: create the external media connection with the first conference terminal, and create the first internal media connection with the first conference server.

In some embodiments, the transceiver module 1320 is further configured to: receive media port information that is on the first conference terminal and that is sent by the signaling server; and send first media port information on the media exchange server to the first conference terminal via the signaling server. The media port information on the first conference terminal and the first media port information on the media exchange server are used to create the external media connection for the first conference terminal.

In some embodiments, the transceiver module 1320 is further configured to: send second media port information on the media exchange server to the first conference server via the signaling server; and receive media port information that is on the first conference server and that is sent by the signaling server. The media port information on the first conference server and the second media port information on the media exchange server are used to create the first internal media connection for the first conference terminal.

In some embodiments, the transceiver module 1320 is further configured to receive indication information from the signaling server, where the indication information indicates to associate the external media connection with the first internal media connection. The processing module 1310 establishes an association relationship between the first media port information and the second media port information.

In some embodiments, when canceling the association relationship between the external media connection and the first internal media connection, the processing module 1310 may cancel the association relationship between the first media port information and the second media port information.

In some embodiments, the processing module 1310 establishes the second internal media connection after the transceiver module 1320 receives a trigger instruction from the signaling server and before the processing module associates the external media connection with the second internal media connection.

In some embodiments, the transceiver module 1320 sends third media port information on the media exchange server to the second conference server via the signaling server; and receives media port information that is on the second conference server and that is sent by the signaling server. The media port information on the second conference server and the third media port information on the media exchange server are used to create the second internal media connection for the first conference terminal. When associating the external media connection with the second internal media connection, the processing module 1310 establishes an association relationship between the first media port information and the third media port information.

In some embodiments, the processing module 1310 deletes the media port information on the first conference server. The transceiver module 1320 sends the second media port information on the media exchange server to the second conference server via the signaling server; and receives media port information that is on the second conference server and that is sent by the signaling server. The second media port information and the media port information on the second conference server are used to create the second internal media connection.

It should be understood that division into the modules in the apparatus is merely logical function division. During actual implementation, all or some of the units may be integrated into one physical entity or may be physically separated. In addition, all the modules in the apparatus may be implemented in a form of software invoked by a processing element, or may be implemented in a form of hardware. Alternatively, some modules may be implemented in a form of software invoked by a processing element, and some modules may be implemented in a form of hardware. For example, each module may be a separately disposed processing element, or may be integrated into a chip in the apparatus for implementation. In addition, each module may alternatively be stored in a memory in a form of a program to be invoked by a processing element of the apparatus to perform a function of the module. In addition, all or some of these modules may be integrated together, or may be implemented independently. The processing element described herein may also be referred to as a processor, and may be an integrated circuit that has a signal processing capability. During implementation, steps in the foregoing methods or the foregoing modules may be implemented by using a hardware integrated logic circuit in a processor element, or may be implemented in a form of software invoked by the processing element.

FIG. 14 is a possible schematic diagram of a structure of a communication apparatus 1400 according to an embodiment of this application. The communication apparatus 1400 may be configured to implement a function of the signaling server or the media exchange server in the foregoing method embodiments, and therefore can also achieve beneficial effects of the foregoing method embodiments.

As shown in FIG. 14, the communication apparatus 1400 includes a processor 1410 and an interface circuit 1420. The processor 1410 and the interface circuit 1420 are coupled to each other. It may be understood that the interface circuit 1420 may be a transceiver or an input/output interface. Optionally, the communication apparatus 1400 may further include: a memory 1430, configured to: store instructions to be executed by the processor 1410, store input data required for running instructions by the processor 1410, or store data generated after the processor 1410 runs instructions.

It may be understood that the processor in embodiments of this application may be a central controller (CPU, central processing unit), a general-purpose processor, a co-controller, a digital signal controller (digital signal processor, DSP), an application-specific integrated circuit (ASIC, application-specific integrated circuit), a field programmable gate array (FPGA, field programmable gate array) or another programmable logic device, a transistor logic device, a hardware component, or any combination thereof. Alternatively, the controller may be a combination for implementing a computing function, for example, a combination including one or more micro-controllers, or a combination of a DSP and a micro-controller.

When the communication apparatus 1400 is configured to implement the method in the foregoing method embodiment, the processor 1410 is configured to perform a function of the foregoing processing module 1410, and the interface circuit 1420 is configured to perform a function of the foregoing transceiver module 1320.

When being used in the signaling server or a chip in the signaling server, the communication apparatus implements the function of the signaling server in the foregoing method embodiments. When being used in the media exchange server or a chip in the media exchange server, the communication apparatus implements the function of the media exchange server in the foregoing method embodiments.

In addition, this application further provides a computer-readable storage medium. The computer-readable storage medium stores a computer program. When the computer program is executed by a computing device, the method implemented by the foregoing signaling server or media exchange server is implemented.

In addition, this application further provides a computer program product. The computer program product includes computer instructions. When the computer instructions are executed by a computing device, the method implemented by the foregoing signaling server or media exchange server is implemented.

The terms "system" and "network" may be used interchangeably in this specification. It should be understood that the term "and/or" in this specification describes only an association relationship for describing associated objects and indicates that three relationships may exist. For example, A and/or B may represent the following three cases: Only A exists, both A and B exist, and only B exists. In addition, the character "/" in this specification usually indicates an "or" relationship between the associated objects. The term "at least one" in this application means one or more, that is, includes one, two, three, or more; and the term "a plurality of" means two or more, that is, includes two, three, or more. "At least one of the following items (pieces)" or a similar expression thereof indicates any combination of these items, including a single item (piece) or any combination of a plurality of items (pieces). For example, at least one item (piece) of a, b, or c may indicate: a, b, c, a-b, a-c, b-c, or a-b-c, where a, b, and c may be singular or plural. It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information. In addition, unless otherwise stated, ordinal numbers such as "first" and "second" in embodiments of this application are used for distinguishing between a plurality of objects, but are not intended to limit an order, a time sequence, priorities, or importance of the plurality of objects. In addition, the terms "include" and "have" in embodiments of this application, the claims, and the accompanying drawings are not exclusive. For example, a process, a method, a system, a product, or a device that includes a series of steps or modules is not limited to the listed steps or modules, and may further include steps or modules that are not listed.

The method steps in embodiments of this application may be implemented by hardware, or may be implemented by a processor by executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be located in an ASIC. In addition, the ASIC may be located in a network device or a terminal. Certainly, the processor and the storage medium may exist in the network device or the terminal as discrete components.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs and instructions. When the computer programs or instructions are loaded and executed on a computer, the procedures or functions in embodiments of this application are completely and partially executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, and an optical memory) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art may make various modifications and variations to this application without departing from the scope of this application. In this way, if these modifications and variations of this application fall within the scope of the claims of this application and their equivalent technologies, this application is also intended to cover these modifications and variations.

## Claims

1. A method for switching a conference mode, wherein the method comprises:
receiving, by a media exchange server, a trigger instruction from a signaling server; and
switching, by the media exchange server to a second internal media connection based on the trigger instruction, a first internal media connection associated with an external media connection, wherein
the external media connection is used to transmit media data of a video conference between a first conference terminal and the media exchange server;
the first internal media connection is used to transmit media data of the video conference between the media exchange server and a first conference server;
the second internal media connection is used to transmit media data of the video conference between the media exchange server and a second conference server; and
the first conference server provides a video conference service in a selective forwarding mode, and the second conference server provides a video conference service in a multipoint control mode; or the first conference server provides a video conference service in a multipoint control mode, and the second conference server provides a video conference service in a selective forwarding mode.

2. The method according to claim 1, wherein the switching, by the media exchange server to a second internal media connection, a first internal media connection associated with an external media connection comprises:
canceling, by the media exchange server, an association relationship between the external media connection and the first internal media connection, and associating the external media connection with the second internal media connection.

3. The method according to claim 2, wherein the method further comprises:
deleting, by the media exchange server, the first internal media connection.

4. The method according to claim 1, wherein the switching, by the media exchange server to a second internal media connection, a first internal media connection associated with an external media connection comprises:
disconnecting, by the media exchange server, the first internal media connection established between the media exchange server and the first conference server, and establishing the second internal media connection between the media exchange server and the second conference server.

5. The method according to any one of claims 2 to 4, wherein before the switching, by the media exchange server to a second internal media connection, a first internal media connection associated with an external media connection, the method further comprises:
creating, by the media exchange server, the external media connection and the first internal media connection.

6. The method according to claim 5, wherein the creating, by the media exchange server, the external media connection comprises:
receiving, by the media exchange server, a second request sent by the signaling server, wherein the second request carries media port information on the first conference terminal; and
sending, by the media exchange server, a second response to the signaling server, wherein the second response carries first media port information on the media exchange server, wherein
the media port information on the first conference terminal and the first media port information on the media exchange server are used to create the external media connection for the first conference terminal.

7. The method according to claim 6, wherein the creating, by the media exchange server, the first internal media connection comprises:
the second response further carries second media port information on the media exchange server; and
receiving, by the media exchange server, media port information that is on the first conference server and that is sent by the signaling server, wherein
the media port information on the first conference server and the second media port information on the media exchange server are used to create the first internal media connection for the first conference terminal.

8. The method according to claim 7, wherein the method further comprises:
receiving, by the media exchange server, indication information from the signaling server, wherein the indication information indicates to associate the external media connection with the first internal media connection; and
establishing, by the media exchange server, an association relationship between the first media port information and the second media port information.

9. The method according to claim 7 or 8, wherein the canceling, by the media exchange server, an association relationship between the external media connection and the first internal media connection comprises:
deleting, by the media exchange server, the association relationship between the first media port information and the second media port information.

10. The method according to any one of claims 6 to 9, wherein the method further comprises:
establishing, by the media exchange server, the second internal media connection after receiving a trigger instruction from the signaling server and before associating the external media connection with the second internal media connection.

11. The method according to claim 10, wherein the establishing, by the media exchange server, the second internal media connection comprises:
sending, by the media exchange server, third media port information on the media exchange server to the second conference server via the signaling server; and
receiving, by the media exchange server, media port information that is on the second conference server and that is sent by the signaling server, wherein
the media port information on the second conference server and the third media port information on the media exchange server are used to create the second internal media connection for the first conference terminal; and
the associating, by the media exchange server, the external media connection with the second internal media connection comprises:
establishing, by the media exchange server, an association relationship between the first media port information and the third media port information.

12. The method according to claim 7 or 8, wherein the disconnecting, by the media exchange server, the first internal media connection established between the media exchange server and the first conference server comprises:
deleting, by the media exchange server, the media port information on the first conference server; and
the establishing, by the media exchange server, the second internal media connection between the media exchange server and the second conference server comprises:
sending, by the media exchange server, the second media port information on the media exchange server to the second conference server via the signaling server; and
receiving, by the media exchange server, media port information that is on the second conference server and that is sent by the signaling server, wherein
the second media port information and the media port information on the second conference server are used to create the second internal media connection.

13. A method for switching a conference mode, wherein the method comprises:
obtaining, by a signaling server, a conference mode switching request; and
triggering, by the signaling server based on the conference mode switching request, a media exchange server to switch, to a second internal media connection, a first internal media connection associated with an external media connection, wherein
the external media connection is used to transmit media data of a video conference between a first conference terminal and the media exchange server; the first conference terminal is any conference terminal participating in the conference;
the first internal media connection is used to transmit media data of the video conference between the media exchange server and a first conference server;
the second internal media connection is used to transmit media data of the video conference between the media exchange server and a second conference server; and
the first conference server provides a video conference service in a selective forwarding mode, and the second conference server provides a video conference service in a multipoint control mode; or the first conference server provides a video conference service in a multipoint control mode, and the second conference server provides a video conference service in a selective forwarding mode.

14. The method according to claim 13, wherein the triggering, by the signaling server, a media exchange server to switch, to a second internal media connection, a first internal media connection associated with an external media connection comprises:
triggering, by the signaling server, the media exchange server to cancel an association relationship between the external media connection and the first internal media connection, and to associate the external media connection with the second internal media connection.

15. The method according to claim 14, wherein the method further comprises:
further triggering, by the signaling server, the media exchange server to delete the first internal media connection.

16. The method according to claim 13, wherein the triggering, by the signaling server, a media exchange server to switch, to a second internal media connection, a first internal media connection associated with an external media connection comprises:
triggering, by the signaling server, the media exchange server to disconnect the first internal media connection established between the media exchange server and the first conference server, and to establish the second internal media connection between the media exchange server and the second conference server.

17. The method according to any one of claims 14 to 16, wherein the method further comprises:
when the first conference terminal joins the video conference, triggering, by the signaling server, the media exchange server to create the external media connection with the first conference terminal, triggering the media exchange server to create the first internal media connection with the first conference server, and triggering the media exchange server to associate the external media connection with the first internal media connection.

18. The method according to claim 17, wherein the method further comprises:
receiving, by the signaling server, a first request from the first conference terminal, wherein the first request comprises media port information on the first conference terminal; and
the triggering, by the signaling server, the media exchange server to create the external media connection with the first conference terminal comprises:
sending, by the signaling server, a second request to the media exchange server, wherein the second request is for requesting to establish media port information for the external media connection, and the second request carries the media port information on the first conference terminal;
receiving, by the signaling server, a second response sent by the media exchange server, wherein the second response carries first media port information on the media exchange server, and the first media port information on the media exchange device is used to create the external media connection for the first conference terminal; and
sending, by the signaling server, a first response to the first conference terminal, wherein the first response carries the first media port information on the media exchange server.

19. The method according to claim 18, wherein the triggering, by the signaling server, the media exchange server to create the first internal media connection comprises:
receiving, by the signaling server, the second response that is sent by the media exchange server and that further carries second media port information on the media exchange server, wherein the second media port information on the media exchange device is used to create the first internal media connection for the first conference terminal;
sending, by the signaling server, a first conference access request to the first conference server, wherein the first conference access request is for requesting the first conference terminal to connect the first conference server, and the first conference access request carries the second media port information on the media exchange server;
receiving, by the signaling server, a first conference access response sent by the first conference server, wherein the first conference access response carries media port information on the first conference server; and
sending, by the signaling server, the media port information on the first conference server to the media exchange server.

20. The method according to claim 17, wherein the method further comprises:
receiving, by the signaling server, a first request from a second conference terminal, wherein the first request is for requesting the first conference terminal to access the video conference;
the triggering, by the signaling server, the media exchange server to create the external media connection with the first conference terminal comprises:
sending, by the signaling server, a second request to the media exchange server, wherein the second request is for requesting to establish first media port information for the external media connection; and
receiving, by the signaling server, a second response sent by the media exchange server, wherein the second response carries first media port information on the media exchange server; and
the method further comprises:
sending, by the signaling server, a first response to the first conference terminal, wherein the first response carries the first media port information on the media exchange server.

21. The method according to claim 20, wherein the triggering, by the signaling server, the media exchange server to create the first internal media connection with the first conference server comprises:
the second request is further for requesting to establish second media port information for the first internal media connection, and the second response further carries second media port information on the media exchange server;
sending, by the signaling server, a first conference access request to the first conference server, wherein the first conference access request is for requesting the first conference terminal to connect the first conference server, and the first conference access request carries the second media port information on the media exchange server;
receiving, by the signaling server, a first conference access response sent by the first conference server, wherein the first conference access response carries media port information on the first conference server; and
sending, by the signaling server, the media port information on the first conference server to the media exchange server.

22. The method according to claim 19 or 21, wherein the triggering, by the signaling server, the media exchange server to associate the external media connection with the first conference terminal with the first internal media connection comprises:
sending, by the signaling server, a first association request to the media exchange server, wherein the first association request indicates the media exchange server to establish an association relationship between the first media port information and the second media port information.

23. The method according to claim 19 or 21, wherein the triggering, by the signaling server, the media exchange server to associate the external media connection with the first conference terminal with the first internal media connection comprises:
the second request sent by the signaling server to the media exchange server further indicates the media exchange server to establish an association relationship between the first media port information and the second media port information.

24. The method according to any one of claims 19 and 21 to 23, wherein the triggering, by the signaling server, the media exchange server to cancel an association relationship between the external media connection and the first internal media connection comprises:
sending, by the signaling server, a disassociation request to the media exchange server, wherein the disassociation request indicates the media exchange server to cancel the association relationship between the first media port information and the second media port information.

25. The method according to any one of claims 14, 15, and 17 to 24, wherein before the obtaining, by a signaling server, a conference mode switching request, the method further comprises:
triggering, by the signaling server, the media exchange server to create the second internal media connection with the second conference server.

26. The method according to claim 25, wherein the triggering, by the signaling server, the media exchange server to create the second internal media connection with the second conference server comprises:
sending, by the signaling server, a third request to the media exchange server, wherein the third request is for requesting to establish third media port information for the second internal media connection;
receiving, by the signaling server, a third response sent by the media exchange server, wherein the third response carries the third media port information;
sending, by the signaling server, a second conference access request to the second conference server, wherein the second conference access request is for requesting the first conference terminal to connect the second conference server, and the second conference access request carries the third media port information;
receiving, by the signaling server, a second conference access response sent by the second conference server, wherein the second conference access response carries media port information on the second conference server; and
sending, by the signaling server, the media port information on the second conference server to the media exchange server.

27. The method according to claim 26, wherein the triggering, by the signaling server, the media exchange server to associate the external media connection with the second internal media connection comprises:
sending, by the signaling server, a second association request to the media exchange server, wherein the second association request indicates the media exchange server to establish an association relationship between the first media port information and the third media port information.

28. The method according to any one of claims 16 to 23, wherein the triggering, by the signaling server, the media exchange server to disconnect the first internal media connection established between the media exchange server and the first conference server comprises:
triggering, by the signaling server, the media exchange server to delete the media port information on the first conference server.

29. The method according to claim 28, wherein the establishing, by the signaling server, the second internal media connection between the media exchange server and the second conference server comprises:
sending, by the signaling server, a second conference access request to the second conference server, wherein the second conference request is for requesting the first conference terminal to connect the second conference server, and the second conference access request carries the first media port information;
receiving, by the signaling server, a second conference access response sent by the second conference server, wherein the second conference access response carries media port information on the second conference server; and
sending, by the signaling server, the media port information on the second conference server to the media exchange server.

30. The method according to any one of claims 16 to 23, 28, and 29, wherein after the obtaining, by a signaling server, a conference mode switching request, the method further comprises:
separately indicating, by the signaling server, the first conference server and the media exchange server to delete the first internal media connection.

31. The method according to any one of claims 13 to 30, wherein the obtaining, by a signaling server, a conference mode switching request comprises:
receiving, by the signaling server, the conference mode switching request sent by a third conference terminal, wherein the third conference terminal is a conference terminal that is in conference terminals participating in the conference and that supports enabling of a conference recording service.

32. The method according to any one of claims 13 to 31, wherein the conference terminals participating in the conference comprise at least two user terminal devices, or comprise a user terminal device and a service agent terminal device, or comprise a user terminal device, a service agent terminal device, the user terminal device, the service agent terminal device, and an expert terminal device.

33. A communication apparatus, comprising a processor and a memory, wherein the processor is coupled to the memory;
the memory is configured to store program instructions; and
the processor is configured to read the program instructions stored in the memory, to implement the method according to any one of claims 1 to 12.

34. A communication apparatus, comprising a processor and a memory, wherein the processor is coupled to the memory;
the memory is configured to store program instructions; and
the processor is configured to read the program instructions stored in the memory, to implement the method according to any one of claims 13 to 32.

35. A communication system, comprising a signaling server, a media exchange server, a first conference server, and a second conference server, wherein the first conference server provides a video conference service in a selective forwarding mode, and the second conference server provides a video conference service in a multipoint control mode; or the first conference server provides a video conference service in a multipoint control mode, and the second conference server provides a video conference service in a selective forwarding mode;
the signaling server obtains a conference mode switching request, and sends a trigger instruction to the media exchange server based on the conference mode switching request;
the media exchange server switches, to a second internal media connection based on the trigger instruction, a first internal media connection associated with an external media connection;
the external media connection is used to transmit media data of a video conference between a first conference terminal and the media exchange server; the first conference terminal is any conference terminal participating in the conference;
the first internal media connection is used to transmit media data of the video conference between the media exchange server and the first conference server; and
the second internal media connection is used to transmit media data of the video conference between the media exchange server and the second conference server.

36. A computer-readable storage medium, wherein the storage medium stores a computer program or instructions, and when the computer program or the instructions are executed by a communication apparatus, the method according to any one of claims 1 to 32 is implemented.

37. A method for switching a conference mode, wherein the method comprises:
obtaining, by a signaling server, a conference mode switching request;
sending, by the signaling server, a trigger instruction to a media exchange server based on the conference mode switching request; and
switching, by the media exchange server to a second internal media connection based on the trigger instruction, a first internal media connection associated with an external media connection, wherein
the external media connection is used to transmit media data of a video conference between a first conference terminal and the media exchange server;
the first internal media connection is used to transmit media data of the video conference between the media exchange server and a first conference server;
the second internal media connection is used to transmit media data of the video conference between the media exchange server and a second conference server; and
the first conference server provides a video conference service in a selective forwarding mode, and the second conference server provides a video conference service in a multipoint control mode; or the first conference server provides a video conference service in a multipoint control mode, and the second conference server provides a video conference service in a selective forwarding mode.

38. The method according to claim 37, wherein the switching, by the media exchange server to a second internal media connection, a first internal media connection associated with an external media connection comprises:
canceling, by the media exchange server, an association relationship between the external media connection and the first internal media connection, and associating the external media connection with the second internal media connection.

39. The method according to claim 38, wherein the method further comprises:
deleting, by the media exchange server, the first internal media connection.

40. The method according to claim 37, wherein the switching, by the media exchange server to a second internal media connection, a first internal media connection associated with an external media connection comprises:
disconnecting, by the media exchange server, the first internal media connection established between the media exchange server and the first conference server, and establishing the second internal media connection between the media exchange server and the second conference server.

41. The method according to any one of claims 38 to 40, wherein the method further comprises:
when the first conference terminal joins the video conference, triggering, by the signaling server, the media exchange server to create the external media connection with the first conference terminal, triggering the media exchange server to create the first internal media connection with the first conference server, and triggering the media exchange server to associate the external media connection with the first internal media connection; and
creating, by the media exchange server, the external media connection and the first internal media connection under the triggering of the signaling server.

42. The method according to claim 41, wherein the method further comprises:
sending, by the first conference terminal, a first request to the signaling server, wherein the first request comprises media port information on the first conference terminal; and
sending, by the signaling server, a second request to the media exchange server, wherein the second request is for requesting to establish media port information for the external media connection, and the second request carries the media port information on the first conference terminal; and
the creating, by the media exchange server, the external media connection with the first conference terminal comprises:
receiving, by the media exchange server, a second request sent by the signaling server, and sending a second response to the signaling server, wherein the second response carries first media port information on the media exchange server; and
sending, by the signaling server, a first response to the first conference terminal, wherein the first response carries the first media port information on the media exchange server, wherein
the media port information on the first conference terminal and the first media port information on the media exchange server are used to create the external media connection for the first conference terminal.

43. The method according to claim 42, wherein the second response further carries second media port information on the media exchange server; and the second media port information on the media exchange device is used to create the first internal media connection for the first conference terminal; and
the method further comprises:
sending, by the signaling server, a first conference access request to the first conference server, wherein the first conference access request is for requesting the first conference terminal to connect the first conference server, and the first conference access request carries the second media port information on the media exchange server;
sending, by the first conference server, a first conference access response to the media exchange server, wherein the first conference access response carries media port information on the first conference server;
sending, by the signaling server, the media port information on the first conference server to the media exchange server; and
receiving, by the media exchange server, the media port information on the first conference server, wherein
the media port information on the first conference server is used to create the first internal media connection for the first conference terminal.

44. The method according to claim 41, wherein the method further comprises:
sending, by the second conference terminal, a first request to the signaling server, wherein the first request is for requesting the first conference terminal to access the video conference; and
the triggering, by the signaling server, the media exchange server to create the external media connection with the first conference terminal comprises:
sending, by the signaling server, a second request to the media exchange server, wherein the second request is for requesting to establish first media port information for the external media connection;
receiving, by the signaling server, a second response sent by the media exchange server, wherein the second response carries first media port information on the media exchange server;
sending, by the signaling server, a first response to the first conference terminal, wherein the first response carries the first media port information on the media exchange server; and
receiving, by the first conference terminal, the first response.

45. The method according to claim 44, wherein the triggering, by the signaling server, the media exchange server to create the first internal media connection with the first conference server comprises:
the second request is further for requesting to establish second media port information for the first internal media connection, and the second response further carries second media port information on the media exchange server;
sending, by the signaling server, a first conference access request to the first conference server, wherein the first conference access request is for requesting the first conference terminal to connect the first conference server, and the first conference access request carries the second media port information on the media exchange server;
sending, by the first conference server, a first conference access response to the signaling server, wherein the first conference access response carries media port information on the first conference server;
sending, by the signaling server, the media port information on the first conference server to the media exchange server; and
receiving, by the media exchange server, the media port information on the first conference server.

46. The method according to claim 43 or 45, wherein the method further comprises:
sending, by the signaling server, a first association request to the media exchange server, wherein the first association request indicates the media exchange server to establish an association relationship between the first media port information and the second media port information; and
the associating, by the media exchange server, the external media connection with the first conference terminal with the first internal media connection comprises:
associating, by the media exchange server, the external media connection with the first conference terminal with the first internal media connection based on the first association request.

47. The method according to claim 43 or 45, wherein the second request sent by the signaling server to the media exchange server further indicates the media exchange server to establish an association relationship between the first media port information and the second media port information.

48. The method according to any one of claims 43 and 45 to 47, wherein the method further comprises:
sending, by the signaling server, a disassociation request to the media exchange server, wherein the disassociation request indicates the media exchange server to cancel the association relationship between the first media port information and the second media port information; and
the canceling, by the media exchange server, an association relationship between the external media connection and the first internal media connection comprises:
canceling, by the media exchange server, the association relationship between the first media port information and the second media port information based on the disassociation request.

49. The method according to any one of claims 39, 40, and 42 to 48, wherein before the obtaining, by a signaling server, a conference mode switching request, the method further comprises:
triggering, by the signaling server, the media exchange server to create the second internal media connection with the second conference server.

50. The method according to claim 49, wherein the method further comprises:
sending, by the signaling server, a third request to the media exchange server, wherein the third request is for requesting to establish third media port information for the second internal media connection; and
the creating, by the media exchange server, the second internal media connection with the second conference server comprises:
sending, by the media exchange server, a third response to the signaling server, wherein the third response carries the third media port information;
sending, by the signaling server, a second conference access request to the second conference server, wherein the second conference access request is for requesting the first conference terminal to connect the second conference server, and the second conference access request carries the third media port information;
sending, by the second conference server, a second conference access response to the signaling server, wherein the second conference access response carries media port information on the second conference server; and
sending, by the signaling server, the media port information on the second conference server to the media exchange server.

51. The method according to claim 50, wherein the method further comprises:
sending, by the signaling server, a second association request to the media exchange server, wherein the second association request indicates the media exchange server to establish an association relationship between the first media port information and the third media port information; and
the associating, by the media exchange server, the external media connection with the second internal media connection comprises:
establishing, by the media exchange server, the association relationship between the first media port information and the third media port information based on the second association request.

52. The method according to any one of claims 41 to 48, wherein the disconnecting, by the media exchange server, the first internal media connection established between the media exchange server and the first conference server comprises:
deleting, by the media exchange server, the media port information on the first conference server.

53. The method according to claim 49, wherein the method further comprises:
sending, by the signaling server, a second conference access request to the second conference server, wherein the second conference request is for requesting the first conference terminal to connect the second conference server, and the second conference access request carries the first media port information; and
the establishing the second internal media connection between the media exchange server and the second conference server comprises:
sending, by the second conference server, a second conference access response to the signaling server, wherein the second conference access response carries media port information on the second conference server;
sending, by the signaling server, the media port information on the second conference server to the media exchange server; and
receiving, by the media exchange server, the media port information on the second conference server.
